# EUROPEAN PATENT APPLICATION

(11) **EP 4 668 079 A1**
(43) Date of publication of application: **24.12.2025**
(21) Application number: 24305969.8
(22) Date of filing: 20.06.2024
(51) Int. Cl.: G06F 3/046

(54) **DEVICE, SYSTEM, AND METHOD FOR INPUT DETECTION AND/OR DETERMINATION**

(71) Applicant: Advanced Magnetic Interaction, AMI, 38170 Seyssinet-Pariset (FR)
(72) Inventor: Hautson, Tristan, 38170 Seyssinet-Pariset (FR); Pellerano, Vincent Thomas, 38170 Seyssinet-Pariset (FR)
(74) Representative: BIC

(57) **Abstract**

A detection device (10) for detecting and/or determining an input event comprises a housing (100), a stationary substrate (110) connected to the housing (100), and a flexible substrate (120) connected to the housing (100) above and at a distance from the stationary substrate (110). At least one magnetometer (130) is connected to one of the stationary substrate (110) and the flexible substrate (120). At least two magnetic objects (140, 140a, 140b) are connected to the other one of the stationary substrate (110) and the flexible substrate (120), the at least two magnetic objects (140, 140a, 140b) being at a distance relative to each other. The flexible substrate (120) is configured to deflect relative to the stationary substrate (110) based on a force (F) applied to the flexible substrate (120).

## Description

### TECHNICAL FIELD

The present disclosure relates to the technical field of determining and/or tracking a location of magnetic objects and/or passive accessories, and more specifically to a detection device, to a detection system and to a method for detecting and/or determining an input event.

### BACKGROUND

In the technical field of location determination and/or tracking of a magnetic object, the provision of one or more magnetometers allows to measure a magnetic field associated with the magnetic object. The magnetometer measurements enable determining and/or tracking of the location of the magnetic object within a sensing volume created by the plurality of magnetometers. In some cases, at least one magnetic object may be arranged in or coupled to a user-borne device, i.e., a device held or worn by a user. Some user-borne devices using this technology may be electronically and/or electrically passive. More specifically, electrically passive means that the user-borne device may not comprise a power source (e.g., batteries) and/or means to receive power (e.g., wireless power transmission via an inductive coil) for powering an electronic feature of the user-borne device. Electronically passive means that no computation or processing occurs (or happens) on the user-borne device. In some applications, the magnetic object may be arranged within a writing device (e.g., a stylus) which may be operated by a user on a writing support during a user operation. Based on the magnetic field measurements associated with the magnetic object, a location of the writing device on the writing support may be determined.

Besides the described user-borne devices above, input devices are known which may be used to provide data and control signals to an information processing system, such as a computer or information appliance. Input devices may allow a user to input spatial data to a processing or computing system in a simple and intuitive way. In some examples, the input device may be used to select items on an output device (e.g., on a computer screen in a graphical user interface (GUI)), for example by moving a user-borne device, or, in the case of a touch screen, by physically touching an item on the screen. Input devices may also include touchpads or trackpads. Touchpads or trackpads are electronic detection devices with a flat interaction surface and are configured to detect and/or determine a user input on the interaction surface. More specifically, these detection devices may be configured to detect a touch of a user's finger that is operated on the interaction surface (i.e., a user input). Based on the touch, a position and/or motion of the user's finger may be translated to a position and/or motion in a virtual environment, e.g., to control a pointer in a GUI. Touchpads are usually integrated in laptop computers. Trackpads can be used as auxiliary input devices, communicatively coupled with, e.g., a desktop computer or a laptop computer. Usually, touchpads or trackpads include capacitive, force, piezoelectric and/or resistive sensing (components) to detect the user input. For example, capacitive sensing is based on the principle that a capacitance changes at the position at which a user's finger touches the interaction surface. Other detection devices like pressure sensors, IR detectors or ultrasound sensors may be, alternatively or additionally, provided to detect a force applied on a surface, e.g. as is the case with the user input. However, all of these detection devices may be sensitive to an electronic environment, difficult to integrate in small and thin devices, and/or may have poor detection accuracy.

Thus, the object of the present disclosure is to provide an improved detection device, system and/or method for detecting and/or determining an input event, and more specifically which may allow the detection and/or determination of an input event with increased accuracy and/or in a simplified manner.

### SUMMARY

The present disclosure relates to a detection device for detecting and/or determining an input event as defined in claim 1 and a system for detecting and/or determining an input event as defined in claim 10. Furthermore, the present disclosure relates to a method for detecting and/or determining an input event as defined in claim 12. The dependent claims depict advantageous embodiments of the present disclosure.

According to a first aspect of the present disclosure, a detection device for detecting and/or determining an input event comprises a housing, a stationary substrate connected to the housing, and a flexible substrate connected to the housing above and at a distance from the stationary substrate. At least one magnetometer is connected to one of the stationary substrate and the flexible substrate. At least two magnetic objects are connected to the other one of the stationary substrate and the flexible substrate, the at least two magnetic objects being at a distance relative to each other. The flexible substrate is configured to deflect relative to the stationary substrate based on a force applied to the flexible substrate.

The detection device according to the first aspect of the present disclosure may allow for the detection of an input event on the flexible substrate in an improved manner, based on tracking and/or location determination of magnetic objects with magnetometers. Due to the deflection of the flexible substrate, the at least two magnetic objects may be moved, i.e., change its location (comprising position and/or orientation), relative to the at least one magnetometer based on which an input event may be detected. More specifically, the flexible substrate (or at least a portion thereof) may be deflected towards the stationary substrate such that the at least two magnetic objects may be moved towards and/or change its location relative to the at least one magnetometer. The detection device with the at least two magnetic objects and at least one magnetometer may allow for detecting an input event without the provision of typical capacitive and/or resistive sensing components, or other sensors like typical pressure sensors, IR detectors or ultrasound sensors. In some embodiments, the detection device according to the present disclosure may be applied as a force sensor and/or pressure sensor. In a preferred embodiment, the detection device may be applied to detect an input event in the form of a user input on an interaction surface defined by the flexible substrate. The input event detection may comprise an input (e.g., a touch) motion detection, a location detection and/or a pressure level detection. The detection device may be unaffected by light and/or sound pollution, may operate with high accuracy and/or may be integrated in small (and particularly thin) devices, including various input devices and/or user-borne devices. In some embodiments, only one or more than two magnetic objects may be provided and connected to the respective one of the stationary substrate and the flexible substrate. The principles described herein for the at least two magnetic objects may apply analogously.

The flexible substrate may also be defined as a substrate being configured at least partially movable relative to the stationary substrate, more specifically based on a force applied on the flexible substrate. The flexible substrate may also be defined as an elastically deformable substrate. The flexibility of the substrate may be configured such that a force applied on the flexible substrate (e.g., by a component or by a user's finger(s)) may lead to a certain degree of deflection, e.g., in the range of micrometers to millimeters depending on the specific application of the detection device. In preferred embodiments, a deflection of at least 10µm may be provided such that the input event may be detected and/or determined. The flexibility of the flexible substrate may be configured such that the flexible substrate or components connected thereto cannot overcome the entire distance to the stationary substrate based on a force applied on the flexible substrate. The stationary substrate may be a rigid, immovable substrate connected to the housing. The distance between the stationary substrate and the flexible substrate, as well as the distance between the at least two magnetic objects, is a non-zero distance. In some embodiments, each of the at least two magnetic objects may be a permanent magnet.

According to a second aspect of the present disclosure, a detection system for detecting and/or determining an input event comprises a detection device according to the first aspect of the present disclosure, and a processing unit configured to detect and/or determine an input event based on a deflection of the flexible substrate relative to the stationary substrate. The processing unit may be at least one processing unit. The above features, embodiments and advantageous technical effects may also apply to the detection system.

According to a third aspect of the present disclosure, a method for detecting and/or determining an input event comprises collecting magnetic field measurements associated with at least one magnetic field created by at least two magnetic objects and measured with at least one magnetometer of a detection device for detecting and/or determining an input event according to the first aspect of the present disclosure, and detecting and/or determining an input event based on the obtained magnetic field measurements.

The (at least one) processing unit of the detection system according to the second aspect of the present disclosure may be configured to execute the method. The method may be a computer-implemented method. The above features, embodiments and advantageous technical effects may also apply to the method. The method may allow for detecting and/or determining an input event in an improved and/or simplified manner, more specifically with increased accuracy.

Further aspects of the present disclosure relate to a computer system configured to execute the computer-implemented method, a computer program configured to execute the computer-implemented method and a computer-readable medium or signal storing the computer program.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **Fig. 1**: is a schematic view of a detection device and system for detecting and/or determining an input event according to aspects of the present disclosure;
- **Fig. 2A**: is a cross-section of the detection device shown in Fig. 1, wherein the detection device is in a first state;
- **Fig. 2B**: is a cross-section of the detection device shown in Fig. 1, wherein the detection device is in a second state;
- **Figs. 3A and 3C**: are cross-sections of the flexible substrate of the detection device according to aspects of the present disclosure;
- **Fig. 3B and 3D**: are top views of the flexible substrate of the detection device according to aspects of the present disclosure;
- **Figs. 4A to 8B**: are schematic top views of arrangements of a plurality of magnetometers and a plurality of magnetic objects of the detection device relative to each other, and associated saturation areas according to aspects of the present disclosure;
- **Fig. 9**: is a schematic view of a process flow diagrams of a method for detecting and/or determining an input event according to an aspect of the present disclosure.

### DETAILED DESCRIPTION

Embodiments of the detection device, the system, and the method for detecting and/or determining an input event according to the present disclosure will be described with reference to the drawings as follows.

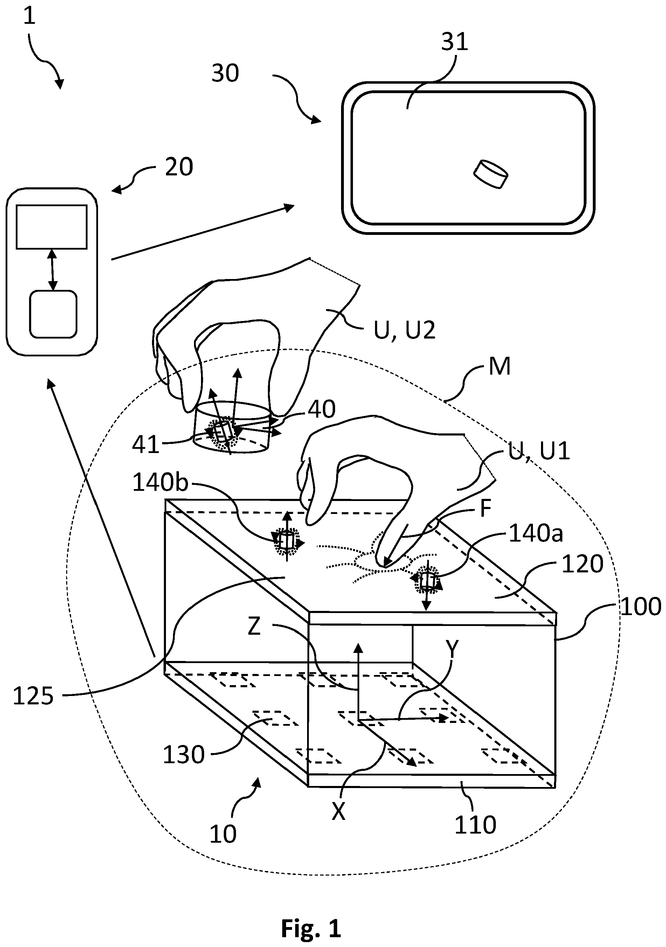

Fig. 1 is a schematic view of a detection device 10 and a system 1 for detecting and/or determining an input event according to aspects of the present disclosure. According to a first aspect of the present disclosure, the detection device 10 for detecting and/or determining an input event comprises a housing 100, a stationary substrate 110 connected to the housing 100, and a flexible substrate 120 connected to the housing 100 above and at a distance d1 from the stationary substrate 110. At least one magnetometer 130 is connected to one of the stationary substrate 110 and the flexible substrate 120. At least one magnetometer 130 is connected to the other one of the stationary substrate 110 and the flexible substrate 120. In a preferred embodiment as shown in Fig. 1, at least two magnetic objects 140, 140a, 140b are connected to the other one of the stationary substrate 110 and the flexible substrate 120 at a distance relative to each other. Due to the provision of the at least two magnetic objects, an input detection and/or determination with increased accuracy can be provided. The flexible substrate 120 is configured to deflect relative to the stationary substrate 110 based on a force F applied to the flexible substrate 120. As illustrated in Fig. 1, the detection system 1 comprises a detection device 10 according to the first aspect of the present disclosure and a processing unit 20. The processing unit 20 is configured to detect and/or determine an input event based on a deflection of the flexible substrate 120 relative to the stationary substrate 110. The processing unit 20 may be configured to track a movement of the at least two magnetic objects 140, 140a, 140b over a time period.

The system 1 and/or the detection device 10 may allow for the detection and/or determination of an input event on the flexible substrate 120. Due to the deflection of the flexible substrate 120, the at least two magnetic objects 140, 140a-e may be moved, i.e., change its location (comprising position and/or orientation), relative to the at least one magnetometer 130, based on which an input event may be detected. More specifically, the flexible substrate 120 (or at least a portion thereof) may be deflected towards the stationary substrate 110 such that the at least two magnetic objects 140, 140a, 140b may be moved towards and/or change its location relative to the at least one magnetometer 130. In other words, the detection device 10 with the at least two magnetic objects 140, 140a, 140b and at least one magnetometer 130 may allow for detecting an input event without the provision of typical capacitive and/or resistive sensing components, or other sensors like typical pressure sensors, IR detectors or ultrasound sensors. In embodiments, the detection device 10 according to the present disclosure may be applied as a force sensor and/or pressure sensor. In a preferred embodiment, the detection device 10 may be applied to detect an input event in the form of a user input on an interaction surface 125 defined by the flexible substrate 130. The input event detection may comprise an input (e.g., a user touch) motion detection, a location detection and/or a pressure level detection. The detection device 10 may be unaffected by light and/or sound pollution, may operate with high accuracy and/or may be integrated in small (and particularly thin) devices, including various input devices and/or user-borne devices. Based on the deflection of the flexible substrate 120, the magnetic objects 140 may be moved (i.e., change its location) relative to the at least one magnetometer 130 which movement and/or location change may be measured by the magnetometer 130 and may be detected as an input event. In some embodiments, only one magnetic object 140, or more than two magnetic objects 140, may be provided and connected to the respective one of the stationary substrate 110 and the flexible substrate 120.

The flexible substrate 120 may also be defined as a substrate being configured at least partially movable relative to the stationary substrate 110, more specifically based on a force applied on the flexible substrate. In some embodiments, the flexible substrate may be defined as an elastically deformable substrate. The flexibility of the flexible substrate 120 may be configured such that a force applied on the flexible substrate 120 (e.g., by a component or by a user's finger(s)) may lead to a certain degree of deflection, e.g., in the range of micrometers to millimeters depending on the specific application of the detection device 10. In some embodiments, a deflection of at least 10µm may be provided such that the input event may be detected and/or determined. The flexibility may be configured such that the flexible substrate 120 cannot overcome the entire distance d1 by a force applied on the flexible substrate 120, i.e., such that the flexible substrate 120 and/or one or more components (e.g., the magnetic object(s), magnetometer(s)) connected to the flexible substrate 120 do not contact the stationary substrate 110. However, in some embodiments, the flexibility may be configured such that the flexible substrate 120 and/or one or more components (e.g., the magnetic object(s), magnetometer(s)) connected to the flexible substrate 120 may contact the stationary substrate 110 by a force applied on the flexible substrate 120, or vice versa (i.e. components connected to the stationary substrate may contact the flexible substrate). In this case, there may be still some distance d1 between the flexible substrate 120 and the stationary substrate 110. In an example, there may be a contact between at least one magnetic object 140, 140a, 140b connected to the flexible substrate 120 and the stationary substrate 110, and/or between at least one magnetometer 130 connected to the stationary substrate 110 and the flexible substrate 120 (or vice versa), based on a force applied on the flexible substrate 120. The stationary substrate 110 may be an immovable substrate connected to the housing 100. The stationary substrate 110 may be a substrate with lower flexibility than the flexible substrate 110. In embodiments, the stationary substrate 110 may be a rigid, immovable substrate 110 and may be configured to support the at least one magnetometer 130 or at least two magnetic objects 140, 140a, 140b. The distance d1 between the stationary substrate and the flexible substrate, as well as the distance between the at least two magnetic objects 140, 140a, 140b, may be a non-zero distance.

The embodiments described herein for the at least two magnetic objects 140, 140a, 140b may also apply for at least one additional magnetic object 41 and any further magnetic objects, which will be described in detail below. In some embodiments, each of the at least two magnetic objects 140, 140a, 140b may be a permanent magnet. The term "magnetic object" may refer to an object which may comprise components of or may be made of magnetic material, i.e., a material that has magnetic properties measurable by the at least one magnetometer 130. In embodiments, the magnetic object(s) 140, 140a, 140b, 41 may be configured to generate a non-zero magnetic field. They may comprise a paramagnetic or diamagnetic material. In embodiments, the magnetic objects may comprise a ferromagnetic material or a ferrimagnetic material. The magnetic objects 140, 41 may be configured to create or generate a symmetric magnetic field, more specifically wherein the magnetic field may be rotationally symmetric. A rotation of the magnetic objects may thus be detectable about a first rotation axis and a second rotation axis of the magnetic objects, more specifically wherein the first rotation axis may be perpendicular to the second rotation axis. However, a rotation about a third rotation axis (being perpendicular to the first rotation axis and the second rotation axis) may not be detectable since the magnetic field may be rotationally symmetric. The magnetic object may be axially magnetized in this case (see, e.g., magnetization axis or magnetic object moment vector 140a in Fig. 1). However, in some embodiments, the magnetic object(s) may comprise a magnetization axis being at an orientation with respect to the magnetic object such that a rotation of the magnetic field may be detectable about a first rotation axis, a second rotation axis and a third rotation axis of the magnetic object. In this case the magnetic object(s) may be configured to create or generate an asymmetric magnetic field, more specifically wherein the magnetic field may be rotationally asymmetric. This may be the case for a magnetic object being width magnetized or thickness magnetized. In some embodiments, one or more magnetic object(s) 140, 140a, 140b, 41 may be parallelepiped magnets. This can facilitate their integration in or on flat surfaces, i.e. the flexible substrate 120.

The detection device 10 and/or detection system 1 may allow the tracking and/or location determination of the at least two magnetic objects 140, 140a, 140b in at least five degrees of freedom. The at least one magnetometer 130 may be configured to create the sensing volume M and/or area (as indicated, e.g., in Fig. 1). The sensing volume M may have an ellipsoidal form. The at least one magnetometer (and any other magnetometers) may be configured to measure the magnetic field created by the at least two magnetic objects 140, 140a, 140b in the directions of a reference coordinate system XYZ, which will be described below. In other words, each magnetometer 130 may be configured to perform magnetic field measurements in the direction of one axis (i.e., one dimension), two axes (i.e., two dimensions), or three axes (i.e., three dimensions). The number of magnetometers provided may depend on the desired size of the sensing volume M within which the at least two magnetic objects are provided (and/or wherein at least one additional magnetic object 41 is operated). The at least one magnetometer 130 may be configured to collect magnetic field measurements associated with the magnetic object(s) within the sensing volume M up to a maximum measurement distance, wherein the maximum measurement distance may be a distance within which the magnetic field measurements can be provided with acceptable reliability and/or accuracy. In embodiments, the maximum measurement distance may be 18cm, more specifically 15cm. During use, the magnetic object(s) described herein may be operated within the maximum measurement distance. The minimum magnetic field generated by at least one magnetic object that may be tracked with the detection device 10 and/or detection system 1 may comprise at least 1 micro tesla, e.g., which may be provided within the distance as mentioned above.

In embodiments, the detection device 10 may be a user-borne device 10. In some embodiments, the detection device may be or applied as a force sensor and/or pressure sensor. In the embodiment as shown in Fig. 1, the detection device 10 may be a touchpad or a trackpad. As mentioned above, the flexible substrate 120 may be configured to deflect towards the stationary substrate 110 based on a force F applied to the flexible substrate 120. The deflection of the flexible substrate 120 relative to the stationary substrate 110 may be indicative of an input event. The input event may comprise an input location, an input motion and/or an input pressure level. The input may be a user input, more specifically a user touch, on the flexible substrate 120. The input event may comprise at least one input location, at least one input motion and/or at least one input pressure level. The input event described herein may be at least one input event.

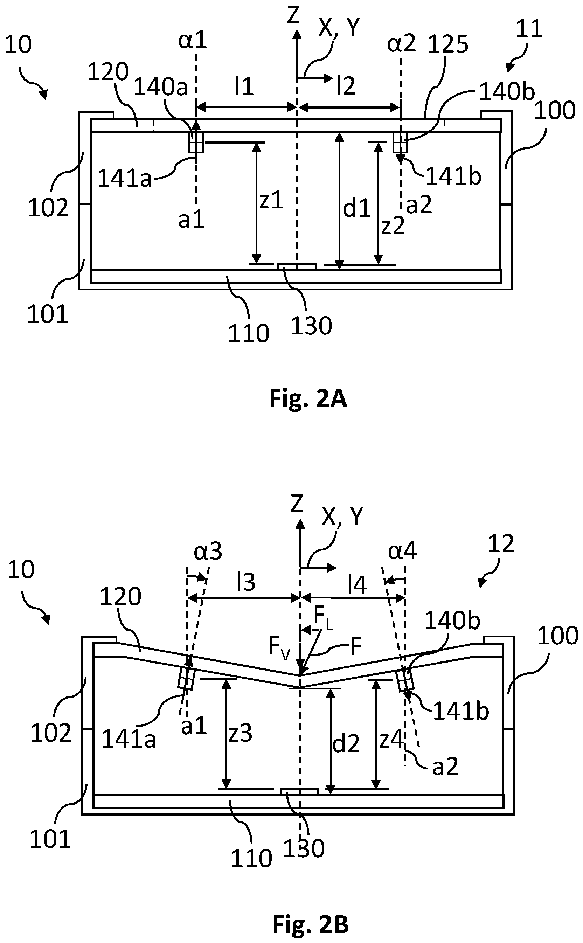

The force F applied to the flexible substrate 120 may be based on the user input. The flexible substrate 120 may define an interaction surface 125 configured to receive the user input. The force F applied to the flexible substrate 120 may be provided by a user's finger(s) touching the interaction surface 125, as illustrated in Fig. 1. In some embodiments, the user U, U1 may touch the flexible substrate 120 with one finger such that a force may be applied to the flexible substrate at a first position. At least one associated input event may be detected. In some embodiments, the user U, U1 may touch the flexible substrate with at least two fingers such that forces may be applied to the flexible substrate 120 at least two positions being distanced to each other. At least two associated input events may be detected and/or may be combined as a resulting input event. As indicated in Fig. 2B, the force on the flexible substrate may be applied with an oblique angle relative to the interaction surface 125 defined by the flexible substrate 120. In this case, the force F may comprise a radial component F_{L} and a vertical component Fv.

The detection device 10 may comprise a processing unit 20 and/or may be communicatively coupled with a processing unit 20 which is external to the detection device 10. As mentioned above, the processing unit 20 may be configured to detect and/or determine an input event based on the deflection of the flexible substrate 120 relative to the stationary substrate 110. The at least one magnetometer 130 may be communicatively coupled with the processing unit 20, particularly to exchange magnetic field measurements. The processing unit 20 may be at least one processing unit. As mentioned above, the detection system 1 may comprise a processing unit 20 which is external to the detection device 10 (e.g., as illustrated in Fig. 1). The processing unit external to the detection device 10 may be wirelessly coupled with the detection device 10 or by wire. In some embodiments, the detection device 10 may comprise at least one first processing unit. The detection system 1 may comprise at least one second processing unit 20 which may be external to the detection device 10. The detection device 10, more specifically the at least one first processing unit and/or the at least one magnetometer, may be communicatively coupled with the at least one second processing unit 20. In other words, the at least one first processing unit may be integrated in the detection device 10. The at least one second processing unit may be integrated in an external device and communicatively coupled with the first processing unit. At least one, or each, of the at least one first and second processing units may be configured to collect magnetic field measurements from the at least one magnetometer (or plurality of magnetometers).

Each of the at least two magnetic objects 140a, 140b may be configured to create a magnetic field. The at least one magnetometer 130 may be configured to generate magnetic field measurements associated with the magnetic fields of the at least two magnetic objects 140a, 140b. More specifically, the at least one magnetometer 130 may be configured to measure the (resulting) magnetic field which is based on the sum of the magnetic fields of each magnetic object (i.e., the superposition of the magnetic fields of each magnetic object). In some embodiments, the processing unit 20 may be configured to detect and/or determine an input event based on a detected magnetic field change of at least one magnetic field created by one or more of the at least two magnetic objects 140a, 140b. The magnetic field change may be dependent on the deflection of the flexible substrate 120 relative to the stationary substrate 110. The processing unit 20 may be configured to collect the magnetic field measurements of the at least one magnetometer 130. The processing unit 20 may be configured to detect and/or determine the input event based on the collected magnetic field measurements. It should be noted that the magnetic properties of the respective magnetic objects 140 may not change due to the magnetic field change. However, the resulting magnetic field seen and measured by the magnetometers 130 may change. The magnetic field change may also be described with a magnetic object signature each magnetic object 140 may have in a first state and a second state, and which may change during the magnetic field change. The magnetic signature of a magnetic object 140 may have distinctive characteristics making it possible to distinguish the magnetic object from other magnetic objects, as well as to distinguish a first magnetic signature of the resulting magnetic field in the first state of the magnetic objects and a second magnetic signature of the resulting magnetic field in the second state of the magnetic objects. The first and second magnetic signatures as well as the magnetic signature transition may be detectable with the at least one magnetometer 130. Each magnetic signature may comprise a set of vectors describing a magnetic object vector field of the magnetic objects (more specifically, the resulting magnetic field) in the first and second states. The magnetic field may comprise a magnetic field strength and/or a magnetic field form. The transition may comprise a change of the magnetic field strength and/or a change of the magnetic field form. The magnetic object may comprise the magnetic object moment vector and/or a magnetic object position vector associated with the magnetic field. In other words, each magnetic object 140 may be modeled as a magnetic dipole being defined by the magnetic object moment vector and/or the magnetic object position vector. The magnetic object moment vector and/or the magnetic object position vector may be used to determine the magnetic field change. The magnetic object moment vector may define a magnetic object orientation and/or a magnetic object strength, i.e., the magnetic field strength of the magnetic object. The magnetic object strength may be related to the magnetization of the magnetic object 140 and its volume. The magnetic field form may be indicative of a 3D form of the magnetic field associated with the magnetic objects. The change of the magnetic field strength and/or a change of the magnetic field form may occur due to another object being brought in proximity to (or away from) the magnetic object. The other object may have an influence on (i.e., change) the magnetic field strength and/or the magnetic field form of the magnetic object 140. The magnetic field form may be defined by the magnetic object signature and the magnetic object vector field as described above, and which may be detectable with the plurality of magnetometers. During the magnetic field change, the (resulting) magnetic object vector field may change which may be detectable, with the at least one magnetometer.

In embodiments, which may be combined with all embodiments described above, the processing unit 20 may be configured to detect and/or determine an input event based on a detected location change of at least one, or each, of the at least two magnetic objects 140a, 140b relative to the at least one magnetometer 130. More specifically, the location change can comprise a position change and/or an orientation change. The location change may be dependent on the deflection of the flexible substrate 120 relative to the stationary substrate 110. The detected location change may be based on the detected magnetic field change. In more detail, the magnetic field change detection and/or location change detection may be dependent on the deflection of the flexible substrate 120 and an associated movement of the at least two magnetic objects 140, 140a, 140b relative to each other and relative to the at least one magnetometer 130. The magnetic field change and/or the location change may be detectable based on magnetic field measurements with the at least one magnetometer 130.

In some embodiments, the processing unit 20 may be configured to correlate the detected and/or determined input event with at least one trigger event. The at least one trigger event may be configured to implement an input event as an action in a digital environment. The at least one trigger event may be configured to control an action in the digital environment. In an example (not illustrated), the detection device 10 may be communicatively coupled with a database. The database may comprise data associating the at least one trigger event with the detected and/or determined input event. The respective trigger event may be, e.g., a click function, a scroll function, a zoom function, a drag and drop function, a selection function, and/or a keyboard function. The at least one trigger event may cause an action and/or may be used to control an action in a digital environment (i.e., an environment which is controlled by a computer or a network of computers), more specifically a virtual environment. This may be based on a user input on the detection device 10. More specifically, the at least one trigger event may implement a user input on the detection device 10 as an action in the digital environment, e.g., a virtual environment. For instance, the detection device 10 may be communicatively coupled with an electronics device, e.g., a tablet, a cell phone, a laptop, a computer, a virtual reality (VR) set or a television. The at least one trigger event may cause an action on the electronics device and/or may be used to control an action on the electronics device based on a user input on the detection device 10.

As mentioned above, the at least one trigger event may be a scroll event, a selection event and/or a click event. The trigger event (e.g. the scroll event) may trigger a scroll action in a digital environment, more specifically a virtual environment, based on a user input on the flexible substrate 120, e.g., "scroll up" and "scroll down" on a display. The scroll event may cause or provide a control of a rotational and/or translational movement of a virtual object in a digital environment that is associated with a user input. For instance, the scroll event may trigger a scroll action including scrolling of files or data, a rotational or translational movement of the virtual object associated with a selection of a choice from a plurality of choices (e.g. combining a scroll event and a selection event). The scroll action may also include rotating a body in a virtual environment and/or changing a perspective in a virtual environment. Furthermore, a scroll action may include one or more of moving a cursor in two opposing directions (e.g., horizontal or vertical on an output device), moving a displayed element (e.g. a page, a cursor), a step in a direction, flipping through a menu, flipping through a selection list, or adjusting (e.g. increasing or decreasing, zooming in or out) a parameter (e.g. a setting or a configuration). A click event may trigger a click action (more specifically of a virtual object) in a digital environment, more specifically a virtual environment, based on a user input. A click event may (e.g., in combination with a selection event) include, e.g., a selection of an object (like a button, a file, an icon or another object), a selection of an item, a selection of a list, a selection of an item on a list. A click event may trigger a following action. A click event may trigger an action that provides additional information and/or properties of an object, an item or a text (e.g., letter, word, phrase) selected. A click event may trigger a single click action, a double click action, a triple click action, a right click action (e.g., an input on a different location compared to the single click) and/or a click-and-drag action within a digital environment, more specifically a virtual environment. A single click action may refer to selection of an object within a virtual environment. A double click action may open a file or execute a program within a virtual environment. A click-and-drag action may include clicking, holding (e.g. keeping the input on the flexible substrate 120) and moving an object, e.g., which may be used to highlight or drag-select a text or an object. A triple click action may be used to select a paragraph of a text. A right click action may perform a special action, e.g., opening a list with additional information and/or properties for a selected object as mentioned above. The action that is triggered by the trigger event (e.g., the type of click event) may depend on the (user's) input on the detection device, more specifically the flexible substrate 120. The type of action may also depend on the location of the flexible substrate 120 on which the input is applied. For example, the click event may cause a double-click action when a user provides two quick and successive inputs on the flexible substrate 120, and/or a different action in case the input is applied to two or more different locations on the flexible substrate 120. In addition to the examples mentioned herein, the above-mentioned features enable various new application fields for the detection device 10, for example a control of an electronic device (e.g. an audio control or a visual control), a control of software settings or visualizations (e.g. graphic software or design software), and/or a control of a computer game.

As illustrated in Fig. 1, the system 1 may comprise at least one user-borne device 40 which may be coupled with or comprise at least one additional magnetic object 41. The user-borne device 40 may be electrically and/or electronically passive. Electrically passive means that the user-borne device 40 may not comprise a power source (e.g., batteries) and/or means to receive power (e.g., wireless power transmission via an inductive coil) for powering a feature (e.g., an electronic feature) of the user-borne device 40. Electronically passive means that no computation or processing occurs (or happens) on the user-borne device 40. However, in some embodiments, the user-borne device 40 may still comprise electronic features such as light emitters, and/or buttons. The processing unit 20 may be configured to determine a location of the at least one additional magnetic object 41 and/or of the at least one user-borne device 40 within the sensing volume M, more specifically relative to the housing 100 and/or the flexible substrate 120. The housing 100, particularly the flexible substrate 120, may define an interaction surface 125. The at least one additional magnetic object 41 and/or the at least one user-borne device 40 may be operable on the interaction surface 125. The user-borne device 40 and/or the at least one additional magnetic object 41 may be mobile, i.e., freely movable within the reference coordinate system XYZ defined by the detection device 10 (see, e.g., Fig. 1). In other words, during a user operation (i.e., an operation wherein the user-borne device and/or the at least one additional magnetic object is operated by a user), the location of the at least one additional magnetic object within the sensing volume M and/or relative to the interaction surface (i.e., the interaction surface on the flexible substrate or any other a surface within the sensing volume M on which the user-borne device and/or the at least one additional magnetic object may be operated) may be manipulated by a user within the sensing volume M.

Referring to Fig. 1, the detection system 1 may comprise at least one output device 30. The processing unit(s) 20 may be configured to represent one or more of the at least two magnetic objects 140, 140a, 140b, the at least one additional magnetic object 41 and the user-borne device 40 as a virtual object on the at least one output device 30. A movement of the virtual object on the at least one output device 30 may be based on a virtual reproduction of a determined location of one or more of the at least two magnetic objects 140, 140a, 140b, the at least one additional magnetic object 41 and the user-borne device 40, more specifically relative to the housing 100 and/or the flexible substrate 120 (e.g. which may define an interaction surface). A movement of the virtual object may also be based on a deflection of the flexible substrate 120.

Referring back to Fig. 1, the movement of the at least one additional magnetic object 41 within the sensing volume M may be caused by a manipulation of the at least one additional magnetic object 41 or user-borne device 40 coupled with the at least one magnetic object 41 during a user operation (e.g., in which a user U, U2 may manipulate the user-borne device within the sensing volume). Additionally or alternatively, a user input may be provided on the flexible substrate which may be detected and/or determined by the detection device 10 as an input event. The movement of the at least one additional magnetic object 41 and/or the input on the flexible substrate 120 may be detected, determined and reproduced as a movement of the virtual object on the output device. The visual reproduction may be a motion of a cursor on the output device. In embodiments, the visual reproduction may be any icon (e.g., an arrow, a picture). The at least one output device may be a display 31 or a screen. In some embodiments, the detection device 10 may comprise the output device 30.

As indicated in Fig. 1, the user-borne device 40 may comprise a device contact surface or point which, during a user operation, may be in contact with an interaction surface (i.e., the surface on which the user-borne device may be operated in some embodiments). In some examples, the user-borne device may be a computer mouse. In other examples, the user-borne device 40 may comprise a contact point (e.g., a stylus or other writing device comprising a writing tip with a nib which contacts an interaction surface during a writing operation). In some examples, the user-borne device 40 may be an erasing device or a writing device having an erasing feature. In this example, the user-borne device 40 may comprise contact surface (e.g., the erasing feature) and/or contact point (e.g., the nib). In other examples, the user-borne device may be operated within the sensing volume M but not on the interaction surface (i.e., in the air). In this case, the user-borne device 40 may be used, e.g., as a pointer. The user-borne device 40 may be a computer mouse, a keyboard, a toy, a stylus, a writing and/or drawing device (e.g., a pen), a marker or a dial. The detection system 1 and/or detection device 10 may be configured to track a movement of the user-borne device 40 based on determining a location of the at least one additional magnetic object 40 and an associated user-borne device location.

In embodiments, apart from the magnetometer(s) 130, the detection device 10 may allow for a detection of an input event with only non-resistive and/or non-capacitive sensing components. However, in some embodiments, the detection device 10 may also comprise resistive and/or capacitive sensing components. For example, the magnetic field measurements of the magnetometer(s) may be applied to detect and/or determine the input pressure level (i.e., pressure information). The resistive and/or capacitive sensing components may be provided to detect and/or determine the input location and/or input motion (i.e., location and/or motion information).

Figs. 2A and 2B are cross-sections of the detection device 10 according to aspects of the present disclosure. Fig. 2A shows the detection device 10 in a first state 11 and Fig. 2B shows the detection device in a second state 12. In the as shown in Figs. 2A and 2B, the at least one magnetometer 130 may be connected to the stationary substrate 110 and the at least two magnetic objects 140a, 140b may be connected to the flexible substrate 120. The at least two magnetic objects 140a, 140b may be connected to a lower surface of the flexible substrate 120 and/or may be at least partially arranged in the flexible substrate 120. In some embodiments, the at least two magnetic objects 140a, 140b may be arranged within the flexible substrate 120. The lower surface of the flexible substrate 120 may be the surface which faces the stationary substrate 110. In other embodiments (not shown), the at least one magnetometer 130 and the at least two magnetic objects 140a, 140b may be arranged the other way round. More specifically, the at least one magnetometer 130 may be connected to the flexible substrate 120 and the at least two magnetic objects 140a, 140b may be connected to the stationary substrate 110. Furthermore, the at least one magnetometer 130 may be connected to the lower surface of the flexible substrate 120 and/or may be at least partially arranged in, or arranged within, the flexible substrate 120.

Referring to Figs. 2A and 2B, the housing 100 may comprise a first housing portion 101 (i.e., a lower housing portion) and a second housing portion 102 (i.e., an upper housing portion). The stationary substrate 110 may be connected to the first housing portion 101 and the flexible substrate 120 may be connected to the second housing portion 102. In the embodiment of Figs. 1 to 2B, the first housing portion 101 may be configured as a stand for the detection device 10. In some embodiments, the first housing portion 101 may be coupled to another device. The first housing portion 101 may comprise a shell-like structure. The second housing portion 102 may comprise a frame-like structure exposing the interaction surface 125 defined on the flexible substrate 120. The flexible substrate 120 may be connected to the frame-like structure at its periphery portion. The first housing portion 101 may be directly connected to the second housing portion 102. Alternatively, the first housing portion 101 may be coupled with the second housing portion 102 via an intermediate housing portion (not shown). In this embodiment, the housing 100 of the detection device 10 may be decoupled into two parts and coupled to other devices or components comprising the intermediate housing portion. In an example, the intermediate housing portion may be a table. The first housing portion may be coupled to a lower side of the table and the second housing portion may be coupled to an upper side of the table. In this embodiment, the second housing portion 102 may be configured as a stand. As shown in Figs. 1 to 2B, the detection device 10, more specifically the housing 100, may define a reference coordinate system XYZ comprising a vertical axis Z extending in a vertical direction of the housing 100. The detection device 10, more specifically the housing 100, may define a radial direction X, Y defined by a first radial axis X and a second radial axis Y. The first radial axis X and the second radial axis may be perpendicular relative to each other and may define a plane X, Y which is orthogonal to the vertical axis Z. The vertical axis Z may extend through a center of the housing 100 and/or through a center of the at least one magnetometer 130. The plane X, Y may be defined on or parallel to the stationary substrate. In the first state, the plane X, Y may be parallel to flexible substrate.

Referring back to Figs. 2A and 2B, the detection device 10 may be in the first state 11 in the absence of a force F applied to the flexible substrate 120 (see, Fig. 2A). The detection device 10 may be in the second state 12 when a force F is applied to the flexible substrate 120 (see, Fig. 2B). In the first state 11, each of the at least two magnetic objects 140a, 140b may comprise a first location relative to the at least one magnetometer 130. In the second state 12, at least one, or each, of the at least two magnetic objects 140a, 140b may comprise a second location relative to the at least one magnetometer 130. The first location and the second location may each comprise a position and/or an orientation. In the first state 11, a first substrate distance d1 may be measured in a vertical direction Z between the stationary substrate 110 and the flexible substrate 120. In the second state 12, a second substrate distance d2 may be measured in the vertical direction Z between the stationary substrate 110 and the flexible substrate 120. The second substrate distance d2 may be smaller than first substrate distance d1. The first and second substrate distances may be regarded as minimal distances between the flexible substrate and stationary substrate. The distance d2 may be related to the amount of force or pressure applied on the flexible substrate 120. The distances may be measured between a lower flexible substrate surface and an upper stationary substrate surface. In some embodiments, in the first state 11, the flexible substrate 120 may define a flexible substrate plane that is parallel to a stationary substrate plane.

The first location may comprise a first position and the second location may comprise a second position. Furthermore, as explained more detail below, the first location may comprise a first orientation and the second location may comprise a second orientation. The change of the respective location is related to the position of the input (e.g., force) applied on the flexible substrate 120.

In the first state 11, each of the at least two magnetic objects 140a, 140b may comprise a first position 11, z1, l2, z2 relative to the at least one magnetometer 130. In the second state 12, each of the at least two magnetic objects 140a, 140b may comprise a second position 13, z3, l4, z4 relative to the at least one magnetometer 130. The second position may be different from the first position. The positions 11,12, 13, l4 may be radial positions defined in the X,Y plane and measured from the vertical axis Z in radial direction. Each radial position l may be defined by a X, Y coordinate.

In the first state 11, a first vertical magnetic objects distance z1, z2 may be defined between the at least one magnetometer 130 and the respective at least two magnetic objects 140a, 140b. In the second state 12, a second vertical magnetics object distance z3, z4 may be defined between the at least one magnetometer 130 and the respective at least two magnetic objects 140a, 140b. The first vertical magnetic objects distance z1, z2 may be different from the second vertical magnetic object distance z3, z4. The vertical distances may be measured along the vertical axis Z between a geometric center of the magnetic objects and an upper surface of the magnetometer(s). The vertical axis Z may extend through a center of the housing. The first state magnetic object distance z1, z2 may be larger than the second state magnetic object distance z3, z4.

In the first state 11, the at least two magnetic objects 140a, 140b may create a first magnetic field measured with the at least one magnetometer 130. In the second state 12, the at least two magnetic objects 140a, 140b may create a second magnetic field measured with the at least one magnetometer 130. The second magnetic field may be different from the first magnetic field. In other words, each of the at least two magnetic object 140a, 140b may create a respective magnetic field in the first state 11 and in the second state 12. The sum of the respective magnetic fields may result in the first (resulting) magnetic field in the first state and the second (resulting) magnetic field in the second state. However, it should be noted that the magnetic field of at least one of the at least two magnetic objects may change from the first state to the second state, i.e., at least one of the at least two magnetic objects may create a magnetic field in the second state which may be different from the magnetic field in first state. However, the resulting magnetic field may also change from the first magnetic field to the second magnetic field. The magnetic field measured at the position of the respective magnetometer 130 may change based on the location change of the respective magnetic objects 140, 140a, 140b. The magnetic field generated by at least one magnetic object 140, 140a, 140b may change its position and/or orientation, depending on the location (change) of the respective magnetic object 140, 140a, 140b. In case only one magnetic object 140 is provided, the above principles may apply analogously. In this case, the magnetic object may create a first magnetic field in the first state and a second magnetic field in the second state. The processing unit 20 may be configured to detect and/or determine the magnetic field change based on magnetic field measurements of the first (resulting) magnetic field and the second (resulting) magnetic field. As described above, the magnetic field may comprise a magnetic field strength and/or a magnetic field form. Determining the change (or transition) of the magnetic field may comprise detecting a change of the magnetic field strength and/or a change of the magnetic field form. The first magnetic field of the at least two magnetic objects 140 may comprise a first magnetic field strength and/or a first magnetic field form in the first state, and the second magnetic field of the at least two magnetic objects may comprise a second magnetic field strength and/or a second magnetic field form in the second state. Determining a transition of the magnetic field created by the at least two magnetic objects from the first magnetic field in the first state to the second magnetic field in the second state may comprise determining that the second magnetic field strength is larger or smaller than the first magnetic field strength, and/or determining that the second magnetic field form is different from the first magnetic field form. In preferred embodiments, the first magnetic field strength in the first state measured by the respective magnetometer 130 is lower than the second magnetic field strength in the second state.

Viewed in the vertical direction Z, and as also shown in Figs. 1 to 2B, the at least two magnetic objects 140, 140a, 140b are arranged displaced relative to the at least one magnetometer 130 in the radial direction X, Y. The at least one magnetometer 130 may be arranged between the at least two magnetic objects 140a, 140b in the radial direction X, Y. The at least one magnetometer 130 may be arranged at an equal distance between the at least two magnetic objects 140, 140a, 140b in the radial direction, more specifically viewed in the vertical direction Z. In some embodiments, the at least one magnetometer 130 may be displaced at an equal distance between the at least two magnetic objects 140, 140a, 140b such that, in the first state 11, the resulting magnetic field measurements may be approximately zero. In some embodiments, this may be done by an associated calibration. In case a force is applied on the flexible substrate (i.e., in the second state 12), the resulting magnetic field measurements (or at least some values thereof) may be different from approximately zero such that the input event may be detected and/or determined. In the first state 11, a first radial magnetic objects distance 11, 12 may be defined between a vertical axis Z and the at least two magnetic objects 140a, 140b. In the second state 12, a second radial magnetic object distance l3, l4 may be defined between the vertical axis Z and the at least two magnetic objects 140a, 140b. The first radial magnetic objects distance 11,12 may be different from the second radial magnetic objects distance 13,14.

Referring to Figs. 2A and 2B, the first location may comprise a first orientation and the second location may comprise a second orientation. In the first state 11, each of the at least two magnetic objects 140a, 140b may comprise a first orientation α1, α2 relative to the at least one magnetometer 130. In the second state 12, at least one, or each, of the at least two magnetic objects 140a, 140b may comprise a second orientation α3, α4 relative to the at least one magnetometer 130. As mentioned above, each of the at least two magnetic objects 140a, 140b may define a magnetic object moment vector 141a, 141b. The magnetic object moment vector 141a, 141b may be associated with the magnetic field of the respective magnetic objects 140a, 140b. The direction of the magnetic moment vector may depend on the magnetization direction of the magnetic object. The magnetic object may be a permanent magnet and may comprise a north pole and a south pole, whose position relative to each other represent the magnetization direction and thus define a direction of the magnetic moment vector. The magnetic object 140 may comprise a cylindrical, longitudinal body and may be magnetized in the direction of the longitudinal body, thus providing a symmetric magnetic field. The magnetization direction may extend through the center of mass of the magnetic object in the longitudinal direction, as shown in Figs. 1 to 2B. The respective orientations α1, α3, α2, α4 may be measured between the respective magnetic object moment vectors 141a, 141b and vertical magnetic object axes a1, a2 that extend parallel to the vertical axis Z and through a geometric center of the respective magnetic objects 140a, 140b. In more detail, the at least two magnetic objects 140a, 140b comprise a first magnetic object 140a and at least one second magnetic object 140b. The first magnetic object 140a may define a first magnetic object moment vector 141a and the at least one the second magnetic object 140b may define a second magnetic object moment vector 141b. The first magnetic object 140a and the at least one second magnetic object 140b may be connected to the one of the stationary substrate 110 and the flexible substrate 120 such that the first magnetic object moment vector 141a points in a first direction and the second magnetic object moment vector 141b points in a second direction that is different from the first direction. In the embodiment of Figs. 1 to 2B, the first magnetic object 140a and the at least one second magnetic object 140b are connected to the one of the stationary substrate 110 and the flexible substrate 120 (in these Figs. to the flexible substrate 120), such that, in the first state 11, the first direction is opposite to the second direction. More specifically, in the first state 11, the first magnetic object moment vector 141a and the second magnetic object moment vector 141b may be substantially parallel to the vertical axis Z. The magnetic objects may be coupled to one of the stationary substrate 110 and the flexible substrate 120 such that, in the first state, the longitudinal axis is perpendicular to the respective surface of the flexible substrate or the stationary substrate. In this case, the magnetic object moment vector(s) 141a, 141b represent a normal of the respective surface. In some embodiments, the magnetic objects may be connected to the substrate at an angle. In some embodiments, the magnetic objects may be connected to the one of the flexible substrate 120 and the stationary substrate 110 such that, in the first state, the magnetic object moment vectors are oriented perpendicular relative to one of a flexible substrate plane or a stationary substrate plane (i.e., to the plane defined by the substrate to which the magnetic objects are connected to).

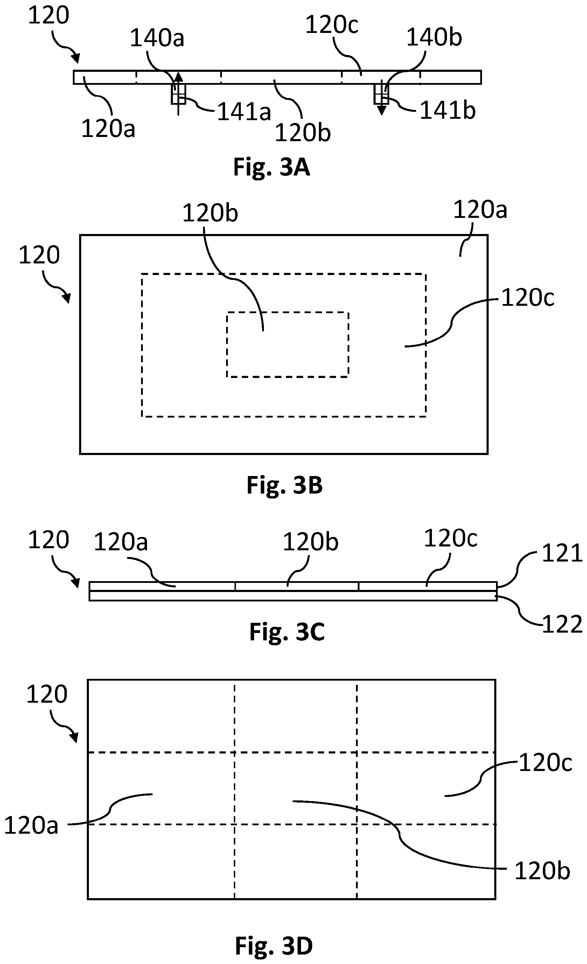

Figs. 3A to 3D illustrate embodiments of the flexible substrate 120. In embodiments, the flexible substrate 120 may comprise one or more layers and may have substantially the same flexibility in all portions of the flexible substrate (e.g., apart from the periphery portion at which the flexible substrate is connected to the housing 100). In some embodiments, the flexible substrate 120 may comprise at least two flexible portions 120a-c. The at least two flexible portions may have the same or a different flexibility. The at least two flexible portions 120a-c may comprise a first flexible portion 120a and a second flexible portion 120b. The second flexible portion 120b may be arranged in a center of the flexible substrate 120. The first flexible portion 120a may at least partially surround the second flexible portion 120b. The at least two flexible portions 120a-c may further comprise at least one third intermediate flexible portion 120c which may be arranged between the first flexible portion 120a and the second flexible portion 120b, and/or which may be arranged adjacent to the first flexible portion 120a and the second flexible portion 120b. In the embodiments of Figs. 3A and 3B, the flexible substrate 120 may comprise one layer having the flexible portions 120a-c. The first flexible portion 120a may fully surround the second flexible portion 120b and, if provided, the third intermediate flexible portion 120c. In some embodiments, the at least two magnetic objects 140 may comprise at least one first magnetic object 140a and at least one second magnetic object 140b. The at least one first magnetic object 140a may be coupled to the first flexible portion 120a and the at least one second magnetic object 140a may be coupled to the second flexible portion 120a. In some embodiments as shown in Fig. 3C, the flexible substrate 120 may comprise at least two layers 121, 122, wherein the at least two layers 121, 122 may comprise a different flexibility. For example, at least one of the layers 121, 122 may comprise the at least two flexible portions 120a-c. In one embodiment, the first layer may comprise the first flexible portion 120a, and the at least one second layer may comprise the second flexible portion 120b. The flexibility of the respective flexible portions and/or layers may be defined by a shear modulus. One or more of the respective flexible portions and/or layers may comprise a different shear modulus. The shear modulus may account for isotropic and/or anisotropic materials used for the respective flexible portions and/or layers. In some embodiments, the flexible substrate 120 may be a flexible membrane. The flexible portions and/or layers may be thin membrane elements connected to each other. In addition, or alternatively to the shear modulus as described above, the flexibility may be dependent on the thickness of the flexible substrate, more specifically the thickness of the flexible portions and/or layers. The thickness of the flexible substrate, more specifically the respective membrane elements, may be related to a mechanical response (i.e., its deformation pattern under an input applied) of the flexible substrate. The flexible substrate, more specifically the membrane elements, may have a certain resistance to in-plane loads, and may have a certain bending stiffness against out of plane loads (e.g., forces applied on the flexible substrate). In addition, or alternatively to the shear modulus and/or thickness as described above, the flexibility and/or the respective deformation of the flexible substrate may thus be dependent on the mechanical load, i.e., the applied (user) input comprising a specific position and/or orientation on the flexible substrate, the material of the flexible substrate (e.g., of the respective flexible portions and/or layers being membranes), and/or the bending stiffness of the flexible substrate (e.g., of the respective membrane elements).

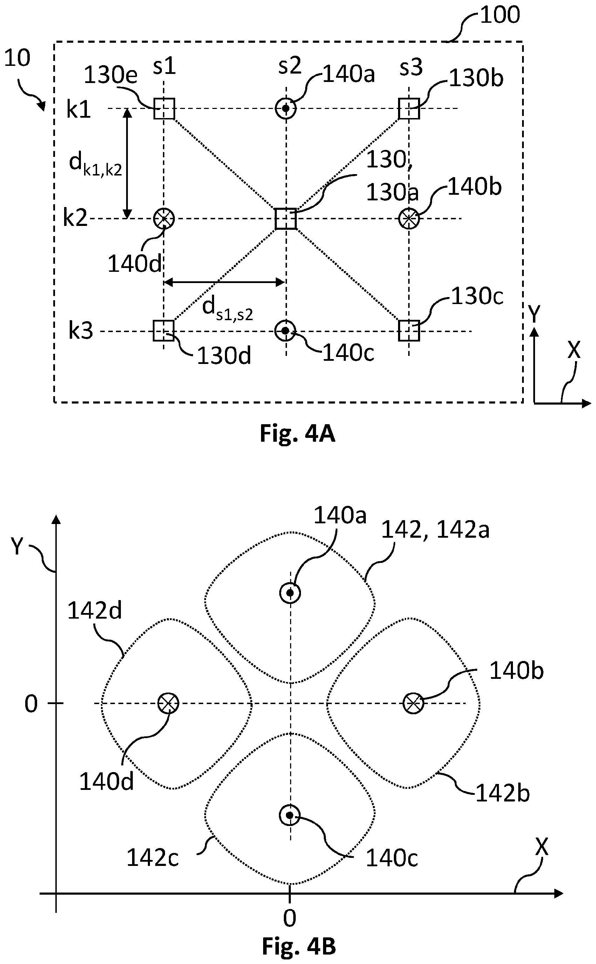

The embodiments above have been described for at least two magnetic objects 140, 140a, 140b and at least one magnetometer 130. In the following, some arrangements of a plurality of magnetic objects 140, 140a-d and a plurality of magnetometers 130, 130a-e relative to each other will be described in detail, more specifically viewed in the vertical direction Z and with reference to Figs. 4A to 8B. It should be noted that these Figs. illustrate the arrangement of the plurality of magnetometers relative to the plurality of magnetic objects viewed in the vertical direction Z and projected into the same plane, in order to describe the arrangements particularly with respect to the radial direction X, Y.

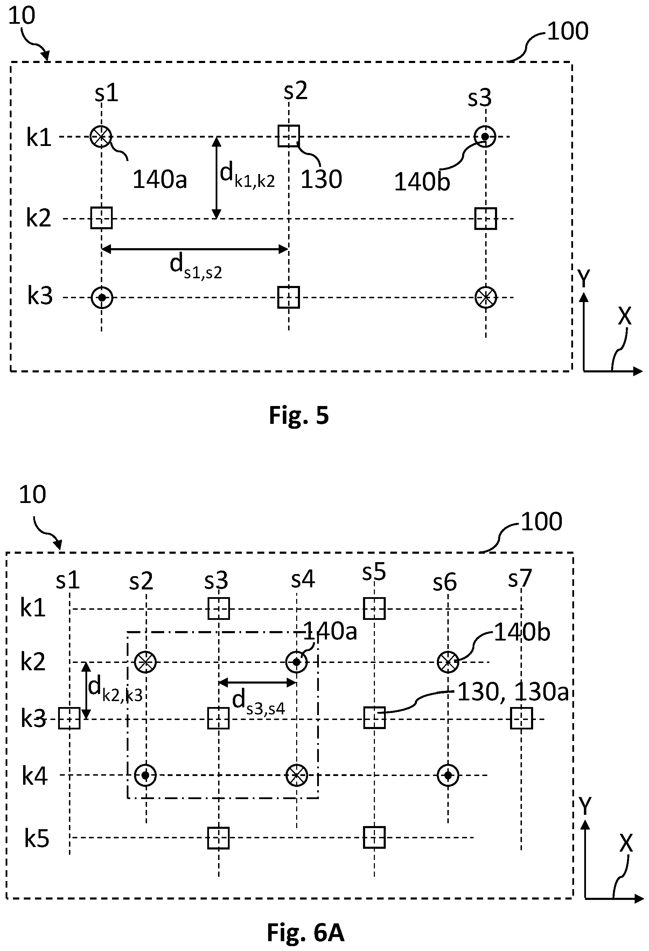

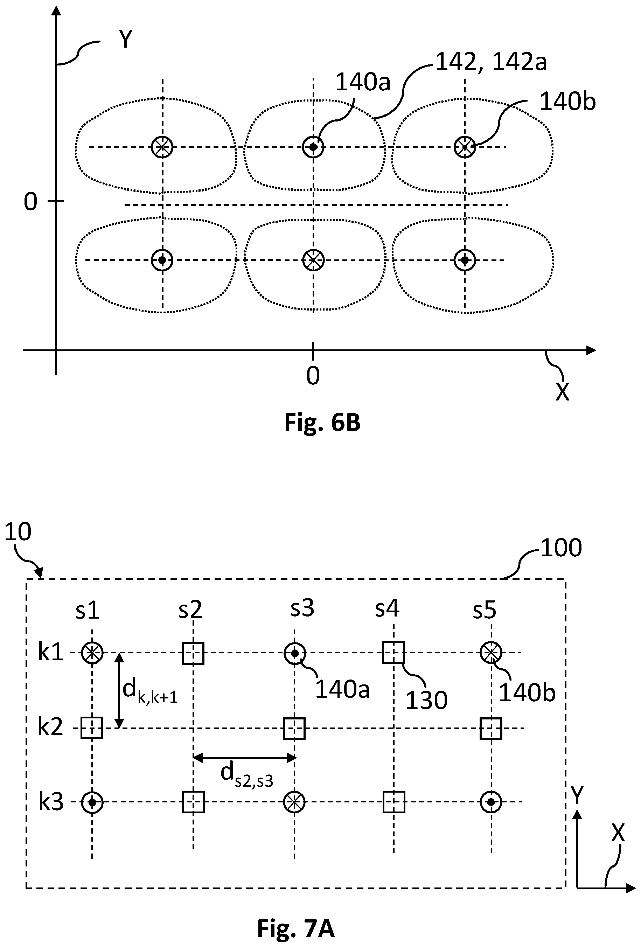

Referring to Figs. 4A to 8B, the detection device 10 may comprise a plurality of magnetic objects 140, 140a, 140b connected to one of the stationary substrate 110 and the flexible substrate 120 at a distance relative to each other. The detection device 10 may comprise a plurality of magnetometers 130 connected to the other one of the stationary substrate 110 and the flexible substrate 120 at a distance relative to each other. Each of the magnetic objects 140, 140a, 140b may comprise a magnetic object moment vector 141a, 141b. The respective magnetic objects 140, 140a, 140b may be arranged such that the respective magnetic object moment vectors 141a, 141b of adjacent magnetic objects 140, 140a, 140b point in different, more specifically opposite, directions. In other words, each magnetic object may be arranged such that adjacent magnetic objects have an inverted polarity (i.e., a change of south pole and north pole), leading to inverted magnetic moment vectors. Based on the arrangements as defined above and the inverted magnetic moment vectors of adjacent magnetic objects, a saturation of respective magnetometers may be reduced and/or prevented. Thereby, increased accuracy for input event detection and/or determination may be provided. As shown e.g. in Figs. 4B and 6B, neighboring magnetic objects 140a-d each have an inverted polarity and the respective magnetic object moment vectors extend in opposite directions (i.e., they may be arranged alternately in opposite directions). The circles 142, 142a-d in Figs. 4B and 6B illustrate the saturation area seen by the magnetometers 130a-e, e.g. as positioned in Figs. 4A and 6A. Due to the inverted polarity of adjacent magnetic objects, the saturation area is separated into the different circles 142, 142a-d which may lower the resultant magnetic field measured by the respective magnetometers and may lower the risk of operating the respective magnetometers in the saturation area. This may allow for increased accuracy of magnetic field measurements and magnetic field change detection. In case all magnetic objects would be arranged to have the same polarity, the cumulated magnetic field measured by the respective magnetometers would cause the one or more of the magnetometers to saturate, which may lead to imprecise measurements. In case a force would be applied in a central region of the pattern, the detection of an exact input location would be more difficult as the magnetometers may be saturated and may provide imprecise magnetic field measurements and associated magnetic field changes.

In the following, the arrangements of the magnetic objects relative to the magnetometers are described with reference to Figs. 4A to 8B. As mentioned above, viewed in the vertical direction Z and projected into the same plane, the plurality of magnetic objects 140 may be arranged displaced relative to the plurality of magnetometers 130 in the radial direction X, Y. Viewed in the vertical direction Z and more specifically projected into the same plane, the at least two magnetic objects 140, 140a, 140b and the at least one magnetometer 130 may be arranged with respect to each other as to form a pattern which is essentially formed as an array comprising rows k and columns s. The respective rows k may be distanced from each other by a distance dₖ and the respective columns s may be distanced from each other by a distance dₛ. The array may define respective positions, which may be defined at the respective intersections of the rows and columns. Although the pattern may be essentially formed as an array and the respective positions may be defined with respect to intersections of the array, this does not necessarily require that the same distances are always provided between the respective magnetometers and magnetic objects. However, in some examples, the distances between the positions in the respective rows and/or the respective columns may be substantially equal. It should be noted that throughout all of the following embodiments, a certain number of rows and columns is mentioned. However, the principles described herein may also apply to a higher number of rows and columns in any combination.

Referring to Figs. 4A to 8B, the array may comprise at least two rows k1, k2 and at least two columns s1, s2. The at least two magnetic objects 140a, 140b may be arranged at positions in the at least two rows k1, k2 and the at least two columns s1, s2 such that the at least one magnetometer 130 may be arranged at a position between the at least two magnetic objects 140a, 140b. More specifically, the at least two magnetic objects 140a, 140b may each comprise a magnetic object moment vector 141a, 141b, wherein the respective magnetic object moment vectors 141a, 141b of adjacent magnetic objects 140a, 140b may point in different directions, particularly in opposite directions. In some embodiments, the magnetic objects may be connected to the one of the flexible substrate and the stationary substrate such that the magnetic object moment vectors are oriented perpendicular relative to the one of the flexible substrate plane or the stationary substrate plane (i.e., to the plane defined by the substrate to which the magnetic objects are connected to), more specifically in the first state. As mentioned, the respective positions of the array are defined at the intersections of the rows and columns. "Adjacent" means in this context the subsequent magnetic object in the array. In an example, the at least one magnetometer 130 may be arranged at at least one position of the following intersections aₖₛ of the array: a11 and a22. The at least two magnetic objects 140 may be arranged at positions of the following coordinates aₖₛ of the array (as illustrated in Fig. 4A): a12 and a21. In embodiments as shown, e.g., in Fig. 4A, at least one of the positions of the array may be free of magnetometers 130 and magnetic objects 140.

Referring to Figs. 4A to 8B, the plurality of magnetic objects 140, 140a, 140b and the plurality of magnetometers 130 may be arranged with respect to each other as to form the pattern which is essentially formed as the array comprising rows k and columns s. In embodiments, the plurality of magnetic objects 140 may be arranged at positions in the at least two rows k1, k2 and the at least two columns s1, s2 such that the plurality of magnetometers 130 is arranged at positions between the plurality of magnetic objects 140 (see, e.g., Fig. 4A). As mentioned above, the plurality of magnetic objects 140 may each comprise a magnetic object moment vector 141. The respective magnetic object moment vectors 141a, 141b of adjacent magnetic objects 140a, 140b may point in different directions, particularly in opposite directions (more specifically in the first state 11). The respective magnetic object moment vectors 141a, 141b may be perpendicular to the plane X, Y, more specifically in the first state 11.

As illustrated in Figs. 4A to 8B, the array may further comprise an additional row k3 and/or an additional column s3. At least one additional magnetometer 130 may be arranged in the additional row k3 and/or the additional column s3. Additionally or alternatively, at least one additional magnetic object 140 may be arranged in the additional row k3 and/or the additional column s3. Additionally or alternatively, at least one position of the additional row k3 and/or additional column s3 may be free of magnetometers 130 and/or magnetic objects 140 (see, e.g., Figs. 5 and 6A).

In some embodiments, the array may comprise at least three rows k1-3 and at least three columns s1-3. At least one magnetometer 130 of the plurality of magnetometers 130 may be arranged in every row k1-3 and/or every column s1-3. In addition, at least one magnetic object 140 of the plurality of magnetic objects 140, 140a, 140b may be arranged in every row k1-3 and/or every column s1-3. In an embodiment, at least one position of an intersection of the rows k1-3 and columns s1-3 in the array may be free of magnetic objects 140 and magnetometers 130 (see, e.g., Figs. 5A and 6). In some embodiments, the array may comprise an additional row k4 and/or an additional column s4. At least one additional magnetometer 130 may arranged in the additional row k4 and/or the additional column s4. Additionally or alternatively, at least one additional magnetic object 140 may be arranged in the additional row k4 and/or the additional column s4.

In the following, the respective embodiments of Figs. 4A to 8B are described in more detail. The arrangements of magnetometers 130 and magnetic objects 140 relative to each other may lead to an improved detection and/or determination of an input event, particularly with increased accuracy and/or reduced saturation of the respective magnetometers. Referring to the embodiment of Fig. 4A, the array may comprise at least three rows k1-3 and at least three columns s1-3. Each position of the array may comprise a magnetic object 140 or a magnetometer 130. The plurality of magnetometers 130 may be arranged at positions at respective corners of the array and in the center of the array. The plurality of magnetic objects 140 may be arranged at positions between the respective magnetometers 130. In more detail, the position of the center of the array may be at the intersection of the second row with the second column. In embodiments, the plurality of magnetometers 130 may be arranged at positions of the following intersections aₖₛ of the array: a11, a13, a22, a31 and a33. The plurality of magnetic objects 140 may be arranged at positions of the following intersections aₖₛ of the array: a12, a21, a23 and a32.

In the embodiment of Fig. 5, the array comprises at least three rows k1-3 and at least three columns s1-3. As illustrated, a position in at least one row k1-3 and/or at least one column s1-3 may be free of magnetic objects 140. At least one position may be free of magnetometers 130 and magnetic objects 140. The plurality of magnetic objects 140 may be arranged at positions at respective corners of the array. The plurality of magnetometers 130 may be arranged at side positions of the array between the magnetic objects 140. The position in the center of the array may be free of magnetic objects 140 and magnetometers 130. In Fig. 5, the plurality of magnetometers 130 is arranged at positions of the following intersections aₖₛ of the array: a12, a21, a23 and a32. The plurality of magnetic objects 140 is arranged at positions of the following intersections aₖₛ of the array: a11, a13, a31 and a33. The position a22 is free of magnetometers and magnetic objects.

Referring to the embodiment of Fig. 6A (see, area framed by the dash-dot-line), the array may comprise at least three rows k2-4 and at least three columns s2-4. At least one row k3 and at least one column s3 may be free of magnetic objects 140. At least one row k2, k4 and at least one column s2, s4 may be free of magnetometers 130. Plural positions of the array may be free of magnetometers 130 and magnetic objects 140. In other words, the respective magnetic objects 140 are separated by a column and a row, more specifically which are free of magnetometers. As shown in Fig. 6A, the plurality of magnetic objects 140 may be arranged at positions at respective corners of the array. One magnetometer 130 may be arranged in the center of the array. Side positions of the array between the magnetic objects 140 may be free of magnetic objects 140 and magnetometers 130. In embodiments (see, entire Fig. 6A), the array may comprise at two additional rows k1, k5 and at least two additional columns s1, s5 surrounding the at least three rows k2-4 and at least three columns s2-4. Each additional row k1, k5 and each additional column s1, s5 may comprise at least one additional magnetometer 130. In embodiments, the array may thus comprise at least five rows k1-5 and at least seven columns s1-7. The plurality of magnetometers 130 may be arranged at positions of the following intersections aₖₛ of the array: a13, a15, a31, a33, a35, a37, a53 and a55. The plurality of magnetic objects 140 may be arranged at positions of the following intersections aₖₛ of the array: a22, a24, a26, a42, a44 and a46. The positions a23, a25, a32, a34, a36, a43 and a44 may be free of magnetometers and magnetic objects.

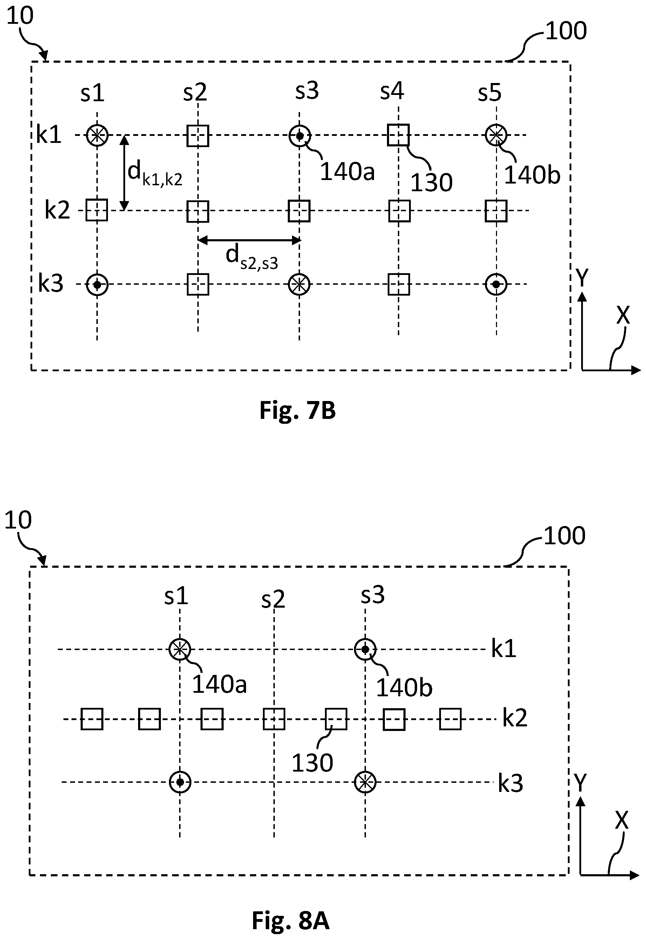

The embodiment of Figs. 7A and 7B are similar to the embodiment of Fig. 5 and may comprise all above-described features. As illustrated in Figs. 7A and 7B, the array may comprise at least three rows k1-3 and at least five columns s1-5. Adjacent magnetic objects 140 may be separated by a row k2 and by a column s2, s4. The plurality of magnetic objects 140 may be arranged at positions at respective corners and at intermediate row positions of the array. Furthermore, the plurality of magnetometers 130 may be arranged at side positions of the array between the magnetic objects 140. At least one row k2 and at least one column s2, s4 may be free of magnetic objects 140. As illustrated in Figs. 7A and 7B, the plurality of magnetometers 130 may be arranged at positions of the following intersections aₖₛ of the array: a12, a14, a21, a23, a25, a32 and a34. The plurality of magnetic objects 140 may be arranged at positions of the following intersections aₖₛ of the array: a11, a13, a15, a31, a33 and a35. In the embodiment of Fig. 7A, the positions a22 and a24 are free of magnetometers and magnetic objects. In the embodiment of Fig. 7B, positions a22 and a24 comprise magnetometers. In other words, in Fig. 7B, magnetometers 130 may be arranged in respective center positions of the array.

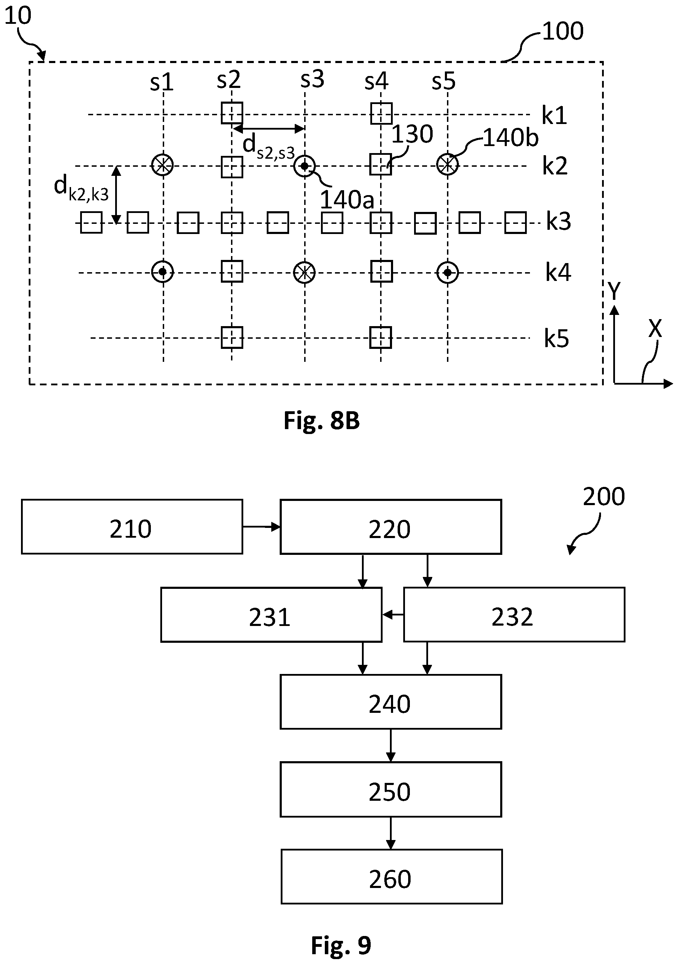

Referring to the embodiments of Fig. 8A and 8B, the array may comprise at least three rows k1-3 and at least three columns s1-3. A plurality of magnetometers 130 may be arranged in at least one row k2. At least one row k2 may be shifted relative to the other rows k1, k3 such that at least some magnetometers of the plurality of magnetometers 140 are arranged at intermediate positions (more specifically with respect to the intersections). The intermediate positions are not at intersections of the respective rows and columns. The plurality of magnetic objects 140 may be arranged at positions at respective corners of the array. At least one row k2 and at least one column s2 may be free of magnetic objects 140. These embodiments are similar to the embodiment of Fig. 6A and the features may apply accordingly. However, in the embodiment of Fig. 8A, at least one row k1, k3 is free of magnetometers 130 and/or all magnetometers 130 are arranged in one row k2. In Fig. 8A, the plurality of magnetic objects 140 may be arranged at positions of the following intersections aₖₛ of the array: a11, a13, a31 and a33. All magnetometers may be arranged in the second row k2. One magnetometer may be arranged at position a22. All further magnetometers may be linearly arranged in the second row, e.g., at intermediate positions along the second row. In the embodiment of Fig. 8B, at least two rows k1, k3, k5 and at least two columns s2, s4 are free of magnetic objects 140. A plurality of magnetometers 130 may be arranged in at least one row k2 and at least two columns s2, s4, respectively, that are free of magnetic objects 140. At least two positions of coordinates of the matrix may be free of magnetic objects 140 and magnetometers 130. At least one of the at least two columns comprising the plurality of magnetometers may also be shifted relative to the other columns. The plurality of magnetometers 130 may be arranged at positions of the following intersections aₖₛ of the array: a12, a14, a22, a24, a32, a34, a42, a44, a52 and a54, as well as at intermediate positions in the third row k3. The plurality of magnetic objects 140 may be arranged at positions of the following intersections aₖₛ of the array: a21, a23, a25, a41, a43 and a45.

Fig. 9 illustrates a schematic view of a process flow diagram of a method for detecting and/or determining an input event according to an aspect of the present disclosure.

Methods for determining the location of a magnetic object based on magnetometer measurements within a sensing volume and associated algorithms are known in the prior art, for example as described in US 2020/116524 A1 or US 2015/057969 A1. The features described therein may analogously apply for the at least two magnetic objects 140, 140a, 140b and/or at least one additional magnetic object 41.

A method 200 may comprise determining at least one magnetic object location within the sensing volume M created by the at least one magnetometer 130 based on obtained magnetic field measurements. The method 200 may comprise defining the reference coordinate system XYZ as described above. Determining a magnetic object location may comprise determining an absolute magnetic object location indicative of an absolute magnetic object position and/or an absolute magnetic object orientation of the magnetic object relative to the reference coordinate system XYZ. More specifically, the absolute magnetic object location may be determined based on the obtained magnetic field measurements. The absolute magnetic object location may be determined based on an implementation of a mathematical model associating each measurement of the at least one magnetometer 130 with a location of the magnetic object in the reference coordinate system XYZ. Each magnetometer of the plurality of magnetometers 130 may be a vector magnetometer and may be configured to measure the magnetic field in one, two or three dimensions. In an embodiment, a coulombian model may be implemented, which may allow a modeling of complex magnetizations of the magnetic object. In examples, a Dipolar model, an Amperian model and/or Mapping based on a Look-Up Table (LUT) may be implemented. In some embodiments, the method may comprise determining a user-borne device location, e.g., when the at least one additional magnetic object 41 is coupled to the user-borne device 40. Determining a user-borne device location may comprise determining a relative magnetic object location indicative of a relative magnetic object position and/or a relative magnetic object orientation of the magnetic object 41 relative to the user-borne device 40, more specifically to a device coordinate system. The relative magnetic object location may comprise a relative magnetic object position and/or a relative magnetic object orientation relative to the device coordinate system. Determining a relative magnetic object location may be based on the absolute magnetic object location as described above and a set of geometric parameters. The set of geometric parameters may comprise predefined geometric parameters indicative of a geometric position and a geometric orientation of the magnetic object 41 relative to the user-borne device 40. In other words, based on the determined absolute location of the magnetic object and the knowledge of the arrangement of the magnetic object relative to or within the user-borne device (more specifically relative to the device coordinate system), the user-borne device location may be known. In embodiments, the method 200 may further comprise applying a filter for filtering the determined magnetic object location and/or the user-borne device location. Magnetic and electronic noise, as well as environmental variations may lead to non-smooth location determinations over time. Based on the filtering, a smooth location trajectory of the magnetic objects 140, 140a, 140b, 41 relative to the reference coordinate system XYZ and/or to the interaction surface may be achieved. For filtering, optimization algorithms or recursive Bayesian estimation such as a Kalman filter may be applied, more specifically an extended Kalman filter or an unscented Kalman filter. In some embodiments, a low-pass filter may be used in combination with a Kalman filter. In embodiments, the at least one magnetic object may be tracked over a time period comprising multiple time samples. At each time sample, the method 200 may comprise determining the magnetic object location. The method may further comprise storing the determined and/or detected features for each time sample. Furthermore, the method may be configured to take into account (more specifically to remove) external magnetic fields, e.g. the earth magnetic field.

Referring to Fig. 9, the method 200 for detecting and/or determining an input event according to the present disclosure comprises collecting magnetic field measurements 210 associated with at least one magnetic field created by at least two magnetic objects 140, 140a, 140b and measured with at least one magnetometer 130 of the detection device 10 according to aspects of the present disclosure. Furthermore, the method 200 comprises detecting and/or determining 240 an input event based on the obtained magnetic field measurements. As mentioned above, each of the at least two magnetic objects 140, 140a, 140b may be configured to create a magnetic field. The at least one magnetometer 130 may be configured to measure the magnetic field(s) and to generate magnetic field measurements of the magnetic field(s). The at least one magnetic field may be the resulting magnetic field which is based on the magnetic fields of the at least two magnetic objects 140, 140a, 140b, as described above. In other words, the method may comprise collecting magnetic field measurements 210 associated with the resulting magnetic field of the magnetic fields created by the at least two magnetic objects 140, 140a, 140b. The above features and advantageous effects described for the detection device 10 and the system 1 may analogously apply to the method 200.

Advantageously, since the magnetic object locations in the second state are close to the (initial) magnetic object locations in the first state, the method 200 according to the present disclosure (and the described tracking algorithm) can be initialized with the default location (comprising position and/or orientation of each magnetic object 140 in the first state). The specific movements of the respective magnetic objects (i.e., the location change from the first state to the second state) based on an input on the detection device may be limited to a certain range, allowing for the method 200 to consider only specific magnetic object movements / locations. Thus, the respective magnetic object location may be limited to certain degrees of freedom of the respective magnetic objects and impossible estimation solutions (e.g. of a filter applied) may be avoided. This may also lower computation resources of the method 200. For example, a maximum (possible) range of movement freedom may be defined for the respective magnetic objects 140 and may be used as input variables for the method 200, e.g., when applying an estimation filter. The limitation to this maximum range may increase accuracy of the estimation filter.

Referring to Fig. 9, detecting and/or determining 240 an input event may comprise determining a location of at least one of the at least two magnetic objects 140, 140a, 140b based on the collected magnetic field measurements. The location determination may be based on the principles as describe above. Determining a location may comprise determining a first location in the first state and determining a second location in the second state. Determining the location change may be based on the determined first location and the determined second location. In embodiments, detecting and/or determining 240 an input event may comprise detecting a magnetic field change 231 of the at least one magnetic field created by the at least two magnetic objects 140a, 140b and associated magnetic field measurements. Additionally or alternatively, detecting and/or determining (240) an input event may comprise detecting a location change 232 of at least one of the at least two magnetic objects 140a, 140b relative to the at least one magnetometer 130. More specifically, the magnetic field change and/or the location change may be dependent on the deflection of the flexible substrate 120 relative to the stationary substrate 110. Detecting the location change 232 may be based on determining the location of at least one of the at least two magnetic objects 140, 140a, 140b. The detected location change may be based on the detected magnetic field change. The magnetic field change and/or the location change may be dependent on the deflection of the flexible substrate 120 and an associated movement of the at least two magnetic objects 140, 140a, 140b relative to the at least one magnetometer 130. In embodiments, detecting and/or determining an input event 240 may comprise determining the input event based on the detected magnetic field change and/or the detected location change. The detected magnetic field change and/or the detected location change may be indicative of a force, more specifically an input (e.g., a user input), applied on the flexible substrate 120. The magnetic field change and/or the detected location change may be provided during transition from the first state to the second state.

In some embodiments, the detected magnetic field change and/or the detected location change may be indicative of an input location, an input motion and/or an input pressure level on the flexible substrate 120. Determining the input event 240 may comprise determining an input location by correlating the detected magnetic field change and/or the detected location change with an interaction surface area of (or defined by) the flexible substrate 120. Additionally or alternatively, determining the input event 240 may comprise determining an input motion by detecting the magnetic field change and/or the location change over a time period comprising multiple time samples, wherein the magnetic field change and/or the location change is detected at each time sample, and by correlating the detected magnetic field change and/or the location change over the time period with the interaction surface area of the flexible substrate 120. Additionally or alternatively, determining the input event 240 may comprise determining an input pressure level by determining deflection parameters based on the detected magnetic field change and/or the detected location change, wherein the deflection parameters may be indicative of a force direction (see, e.g., force vectors F_{L}, F_{V} of force F in Fig. 2B), a force location (e.g., defined relative to the reference coordinate system) and/or a force per interaction surface area (i.e., pressure) applied on the flexible substrate 120. The deflection parameters may include a deviation of the distance between flexible substrate 120 and stationary substrate 110 from the first state to the second state. A correlation between this deviation and the flexibility (e.g., elasticity) of the flexible substrate 120 may be indicative of the amount of force applied to the flexible substrate 120. In some embodiments, the interaction surface area on which the force is applied may be determined by comparing changes in orientation of respective magnetic objects or magnetometers that are adjacent to the area on which the force is applied.

In some embodiments, collecting magnetic field measurements 210 may comprise collecting first magnetic field measurements of the magnetic fields of each of the at least two magnetic objects 140a, 140b in the first state 11 and collecting second first magnetic field measurements of the magnetic fields of each of the at least two magnetic objects 140a, 140b in the second state 12. More specifically, the first magnetic field measurements may be the measurements of the first resulting magnetic field which may be the sum of the magnetic fields of each of the at least two magnetic objects 140a, 140b in the first state 11. The second magnetic field measurements may be the measurements of the second resulting magnetic field which may be the sum of the magnetic fields of each of the at least two magnetic objects 140a, 140b in the second state 12.

In some embodiments, detecting and/or determining an input event 240 may comprise comparing the first magnetic field measurements 220 with the second magnetic fields measurements. Detecting and/or determining an input event 240 may further comprise detecting, based on the compared magnetic field measurements, a magnetic field change and/or a location change of at least one or each of the at least two magnetic objects 140, 140a, 140b from the first state 11 to the second state 12, and determining, based on a detected magnetic field change and/or a detected location change, the input event. In the first state, each of the magnetic objects may be in a first location, respectively. In the second state, each of the magnetic objects may be in a second location, respectively. In embodiments, the method 200 may comprise applying an estimation algorithm to evaluate the location (e.g., comprising position and/or orientation) of each magnetic object over time. The estimation algorithm may be applied to determine a motion of the respective magnetic objects over time based on the evaluated location over time. By design, a motion constraint of the respective magnetic objects may be known. Initial values for the estimation algorithm may be known in the first state 11 (i.e., in case no force is applied on the flexible substrate 120). The initial values may comprise the location (comprising position and/or orientation) of each magnetic object 140, 140a, 140b relative to the detection device 10, more specifically relative to the reference coordinate system XYZ.

As indicated in Fig. 9, the method 200 may further comprise determining at least one trigger event 250 based on the detected and/or determined input event. Determining the at least one trigger event 250 may comprise analyzing the detected and/or determined input event and correlating the analyzed detected and/or determined input event with the at least one trigger event. The at least one trigger event may implement an input event as an action in a digital environment. In more detail, the at least one trigger event may be applied or configured to control an action in the digital environment as described above.

In some embodiments, the method 200 may further comprise collecting additional magnetic field measurements associated with a magnetic field created by the at least one additional magnetic object 41 and measured with the at least one magnetometer 130. The method 200 may comprise determining a location of the at least one additional magnetic object 41 based on the additional magnetic field measurements. The location determination of the additional magnetic object may be carried out based on the principles as describe above. In case at least one additional magnetic object is coupled to or comprised with a user-borne device 40, the method may comprise determined a location of the user-borne device 40 relative to the interaction surface based on the determined location of the at least one additional magnetic object 41. The location determination of the additional magnetic object and/or the user-borne device may be carried out based on the steps as describe above.

Referring back to Fig. 9, the method 200 may further comprise representing 260 the at least two magnetic objects 140, 140a, 140b, the at least one additional magnetic object 41, and/or the user-borne device 40 as virtual object on at least one output device 30 based on determined location(s). A movement of the virtual object on the at least one output device 30 may be based on a virtual reproduction of the determined location(s) of the at least two magnetic objects 140, 140a, 140b, the at least one additional magnetic object 41 and/or the user-borne device 40, more specifically relative housing 100 and/or to the flexible substrate 120.

In embodiments, the method 200 may further comprise assuming a contact between the at least one additional magnetic object 41 and/or user-borne device 40 coupled to or comprising the at least one magnetic object 41, and the interaction surface on which the at least one additional magnetic object 41 and/or the user-borne device 40 is operable. This may be based on the determined magnetic object location. As mentioned above, the flexible substrate of the detection device 10 may define the interaction surface 125. In other examples, the interaction surface may be provided on another device, e.g., a table or a board. Assuming a contact may comprise determining a contact event of the at least one additional magnetic object 41 and/or the user-borne device 40 coupled to or comprising the at least one additional magnetic object 41 with the interaction surface. A specific change of the magnetic field strength and/or of the magnetic field form may be detected with the at least one magnetometer 130. The specific change may be indicative of a contact of the at least one additional magnetic object 41 and/or the user-borne device 40 with the interaction surface. As an example, the user-borne device 40 may comprise the at least one additional magnetic object 41 and may be a writing and/or device. The detection device 10 and/or the system 1 may be coupled to a board or disposed on a table. The flexible substrate 120, the board and/or the table may define an interaction surface, more specifically within the sensing volume. The writing device may be operated on the board, the table or flexible substrate, more specifically the interaction surface. A contact event of the writing device with the board may be determined and a location of the writing device (based on the determined magnetic object location over time) on the board may be represented as a virtual obj ect.

The method 200 as described above may be a computer-implemented method. In some embodiments, the processing unit(s) 20 of the detection device 10 and/or the system 1 may be configured to execute the computer-implemented method. According to an aspect of the present disclosure, a computer system may be configured to execute the computer-implemented method 200 as described above. According to another aspect of the present disclosure a computer program may be configured to execute the computer-implemented method 200 as described above. Furthermore, a computer-readable medium or signal storing the computer program may be provided.

The above-described computer-implemented method 200 can comprise or be executable via a computer or a network of computers, the computer or network of computers comprising at least one processing unit (e.g., a processor, and/or the processing unit(s) 20 as described above) and at least one data storage (i.e., memory). The described procedural logic may be held in the form of executable code in at least one data storage and executed by the at least one processing unit. The systems 1 and detection device 10 may send data to the at least one processing unit and, in examples, they may also receive instructions from the at least one processing unit. The processing unit may thereby direct user-initiated and/or automatically generated queries to the detection system 1 and/or the detection device 10. The detection system 1 and/or the detection device 10 is not limited to a particular hardware environment. Thus, distributed devices coupled via a network may perform the techniques described herein. The disclosure also includes electrical signals and computer-readable media defining instructions that, when executed by a processing unit, implement the techniques described herein. The detection system 1 and/or the detection device 10 may comprise at least one database. Alternatively, or in addition, the detection system 1 and/or the detection device 10 may access a database in a cloud (via a communication interface). The detection system 1 and/or the detection device 10 may comprise a (at least one) communication interface to couple the processing unit(s) 20 and/or the database. The communication interface may comprise one or more of a network, internet, a local area network, a wireless local area network, a broadband cellular network, and/or a wired network. In examples, the detection system 1 and/or the detection device 10 may couple to one or more features via a server hosted in a cloud. The processing unit(s) 20 mentioned above may be communicatively coupled with other processing units external to the detection system 1 and/or the detection device 10.

Although the above principles have been described for a detection system 1 and a detection device 10, multiple detection systems 1 and/or detections devices 10 may be provided. In an example, the detection system 1 may comprise a plurality of detection devices 10 communicatively coupled with each other and/or to a processing unit 20 of the detection system 1. In some embodiments, a plurality of detection systems 1 may be provided, more specifically communicatively coupled with each other. In some embodiments, a plurality of additional magnetic objects 41 may be operated in the sensing volume and/or area. More than one user-borne devices 40 may be provided and operated (e.g., manipulated by a user U) within the sensing volume M created by the at least one magnetometer 130.

Although the present invention has been described above and is defined in the attached claims, it should be understood that the invention may alternatively be defined in accordance with the following embodiments:
1. A detection device (10) for detecting and/or determining an input event, comprising:
   a housing (100),
   a stationary substrate (110) connected to the housing (100), and
   a flexible substrate (120) connected to the housing (100) above and at a distance from the stationary substrate (110),
   wherein at least one magnetometer (130) is connected to one of the stationary substrate (110) and the flexible substrate (120),
   wherein at least two magnetic objects (140, 140a, 140b) are connected to the other one of the stationary substrate (110) and the flexible substrate (120), the at least two magnetic objects (140, 140a, 140b) being at a distance relative to each other, and wherein the flexible substrate (120) is configured to deflect relative to the stationary substrate (110) based on a force (F) applied to the flexible substrate (120).
2. The detection device (10) according to embodiment 1, wherein the detection device (10) is a touchpad or a trackpad.
3. The detection device (10) according to embodiment 1 or embodiment 2, wherein the force (F) applied to the flexible substrate (120) is a user input, and wherein the flexible substrate (120) defines an interaction surface (125) configured to receive the user input.
4. The detection device (10) according to any one of the preceding embodiments, wherein the detection device (10) further comprises only non-resistive and/or non-capacitive sensing components.
5. The detection device (10) according to any one of the preceding embodiments, wherein the flexible substrate (120) is configured to deflect towards the stationary substrate (110) based on a force (F) applied to the flexible substrate (120).
6. The detection device (10) according to any one of the preceding embodiments, wherein the deflection of the flexible substrate (120) relative to the stationary substrate (110) is indicative of an input event, more specifically wherein the input event comprises an input location, an input motion and/or an input pressure level.
7. The detection device (10) according to any one of the preceding embodiments, wherein each of the at least two magnetic objects (140a, 140b) is configured to create a magnetic field, more specifically wherein the at least one magnetometer (130) is configured to generate magnetic field measurements associated with the magnetic fields of the at least two magnetic objects (140a, 140b).
8. The detection device (10) according to any one of the preceding embodiments, wherein the detection device (10) comprises a processing unit (20) and/or is communicatively couplable with a processing unit (20) external to the detection device (10).
9. The detection device (10) according to embodiment 8, wherein the processing unit (20) is configured to detect and/or determine at least one input event based on the deflection of the flexible substrate (120) relative to the stationary substrate (110).
10. The detection device (10) according to embodiment 8 or embodiment 9, wherein the processing unit (20) is configured to detect and/or determine an input event based on a detected magnetic field change of at least one magnetic field created by one or more of the at least two magnetic objects (140a, 140b), more specifically wherein the magnetic field change is dependent on the deflection of the flexible substrate (120) relative to the stationary substrate (110).
11. The detection device (10) according to any one of embodiments 8 to 10, wherein the processing unit (20) is configured to detect and/or determine an input event based on a detected location change of at least one of the at least two magnetic objects (140a, 140b) relative to the at least one magnetometer (130),
   more specifically wherein the location change comprises a position change and/or an orientation change, and
   particularly wherein the location change is dependent on the deflection of the flexible substrate (120) relative to the stationary substrate (110).
12. The detection device (10) according to embodiment 11, wherein the magnetic field change detection and/or location change detection is dependent on the deflection of the flexible substrate (120) and an associated movement of the at least two magnetic objects (140, 140a, 140b) relative to each other and to the at least one magnetometer, and more specifically wherein the magnetic field change and/or the location change is detectable based on magnetic field measurements with the at least one magnetometer (130).
13. The detection device (10) according to any one of embodiments 8 to 12, wherein the processing unit (20) is configured to correlate the detected and/or determined input event with at least one trigger event, more specifically wherein the at least one trigger event implements an input event as an action in a digital environment, particularly wherein the at least one trigger event is configured to control an action in the digital environment.
14. The detection device (10) according to any one of embodiments 8 to 13, wherein the processing unit (20) is configured to collect the magnetic field measurements, and wherein the processing unit (20) is configured to detect and/or determine the input event based on the magnetic field measurements.
15. The detection device (10) according to any one of the preceding embodiments, wherein the detection device (10) is in a first state (11) in the absence of a force (F) applied to the flexible substrate (120), and wherein the detection device (10) is in a second state (12) when a force (F) is applied to the flexible substrate (120).
16. The detection device (10) according to embodiment 15, wherein in the first state (11), each of the at least two magnetic objects (140a, 140b) comprises a first location, and wherein in the second state (12), at least one of the at least two magnetic objects (140a, 140b) comprises a second location, more specifically relative to the at least one magnetometer (130).
17. The detection device (10) according to embodiment 15 or embodiment 16, wherein in the first state (11), the at least two magnetic objects (140a, 140b) create a first magnetic field measured with the at least one magnetometer (130), and wherein in the second state (12) the at least two magnetic objects (140a, 140b) create a second magnetic field measured with the at least one magnetometer (130), wherein the second magnetic field is different from the first magnetic field.
18. The detection device (10) according to embodiment 17, when dependent on embodiment 10, wherein the processing unit (20) is configured to detect and/or determine the magnetic field change based on magnetic field measurements of the first magnetic field and the second magnetic field.
19. The detection device (10) according to any one of the preceding embodiments, wherein the housing (100) comprises a radial direction (X, Y), and wherein, viewed in the vertical direction (Z), the at least two magnetic objects (140a, 140b) are arranged displaced relative to the at least one magnetometer (130) in the radial direction (X,Y), more specifically wherein the at least one magnetometer (130) is arranged between the at least two magnetic objects (140a, 140b) in the radial direction (X,Y).
20. The detection device (10) according to any one of the preceding embodiments, wherein each of the at least two magnetic objects (140a, 140b) defines a magnetic object moment vector (141a, 141b), wherein the magnetic object moment vector (141a, 141b) is associated with the magnetic field of the respective magnetic objects (140a, 140b).
21. The detection device (10) according to any one of the preceding embodiments, wherein the at least two magnetic objects (140a, 140b) comprise a first magnetic object (140a) and at least one second magnetic object (140b), wherein the first magnetic object (140a) defines a first magnetic object moment vector (141a) and wherein at least one the second magnetic object (140b) defines a second magnetic object moment vector (141b).
22. The detection device (10) according to embodiment 21, wherein the first magnetic object (140a) and the at least one second magnetic object (140b) are connected to the one of the stationary substrate (110) and the flexible substrate (120) such that the first magnetic object moment vector (141a) points in a first direction and the second magnetic object moment vector (141b) points in a second direction that is different from the first direction.
23. The detection device (10) according to embodiment 22, wherein the first magnetic object (140a) and the at least one second magnetic object (140b) are connected to the one of the stationary substrate (110) and the flexible substrate (120), such that, in the first state (11), the first direction is opposite to the second direction, and more specifically the first magnetic object moment vector (141a) and the second magnetic object moment vector (141b) are substantially parallel to the vertical axis (Z).
24. The detection device (10) according to any one of the preceding embodiments, wherein the at least one magnetometer (130) is connected to the stationary substrate (110), and wherein the at least two magnetic objects (140a, 140b) are connected to the flexible substrate (120).
25. The detection device (10) according to any one of the preceding embodiments, wherein the housing (100) comprises a first housing portion (101) and a second housing portion (102), wherein the stationary substrate (110) is connected to the first housing portion (101) and wherein the flexible substrate (120) is connected to the second housing portion (102),
   more specifically wherein the first housing portion (101) is directly connected to the second housing portion (102), or
   wherein the first housing portion (101) is coupled with the second housing portion (102) via an intermediate housing portion.
26. The detection device (10) according to any one of the preceding embodiments, wherein the flexible substrate (120) comprises at least two flexible portions (120a-c), wherein the at least two flexible portions have a different flexibility.
27. The detection device (10) according to embodiment 26, wherein at least one first magnetic object (140a) is coupled to the first flexible portion (120a) and wherein at least one second magnetic object (140a) is coupled to the second flexible portion (120a).
28. The detection device (10) according to any one of the preceding embodiments, wherein the flexible substrate (120) comprises at least two layers (121, 122), wherein the at least two layers (121, 122) comprise a different flexibility.
29. The detection device (10) according to embodiment 28, when dependent on embodiment 26, wherein at least one layer (121, 122) comprises the at least two flexible portions (120a-c).
30. The detection device (10) according to any one of the preceding embodiments, wherein the detection device (10) comprises a plurality of magnetic objects (140, 140a, 140b) connected to one of the stationary substrate (110) and the flexible substrate (120) at a distance relative to each other, and wherein the detection device (10) comprises a plurality of magnetometers (130) connected to the other one of the stationary substrate (110) and the flexible substrate (120) at a distance relative to each other.
31. The detection device (10) according to embodiment 30, wherein the housing (100) comprises a radial direction (X, Y), and wherein, viewed in the vertical direction (Z), the plurality of magnetic objects (140) are arranged displaced relative to the plurality of magnetometers (130) in the radial direction (X,Y).
32. The detection device (10) according to any one of the preceding embodiments, wherein, viewed in the vertical direction (Z), the at least two magnetic objects (140, 140a, 140b) and the at least one magnetometer (130) are arranged with respect to each other as to form a pattern which is essentially formed as an array comprising rows (k) and columns (s), more specifically wherein respective rows (k) are distanced from each other by a distance (dₖ) and wherein respective columns (s) are distanced from each other by a distance (dₛ).
33. The detection device (10) according to embodiment 32, wherein the array comprises at least two rows (k1, k2) and at least two columns (s1, s2),
   wherein the at least two magnetic objects (140a, 140b) are arranged at positions in the at least two rows (k1, k2) and the at least two columns (s1, s2) such that the at least one magnetometer (130) is arranged at a position between the at least two magnetic objects (140a, 140b), and
   more specifically wherein the at least two magnetic objects (140a, 140b) each comprise a magnetic object moment vector (141a, 141b), wherein the respective magnetic object moment vectors (141a, 141b) of adjacent magnetic objects (140a, 140b) point in different directions, particularly in opposite directions.
34. The detection device (10) according to embodiment 33, wherein at least one of the positions of the array is free of magnetometers (130) and magnetic objects (140).
35. The detection device (10) according any one of embodiments 32 to 34, when dependent on embodiment 30, wherein the plurality of magnetic objects (140, 140a, 140b) and the plurality of magnetometers (130) are arranged with respect to each other as to form the pattern which is essentially formed as the array comprising rows (k) and columns (s).
36. The detection device (10) according to embodiment 35, when dependent on embodiment 33, wherein the plurality of magnetic objects (140) is arranged at positions in the at least two rows (k1, k2) and the at least two columns (s1, s2) such that the plurality of magnetometers (130) is arranged at positions between the plurality of magnetic objects (140), and
   more specifically wherein the plurality of magnetic objects (140) each comprise a magnetic object moment vector (141), wherein the respective magnetic object moment vectors (141a, 141b) of adjacent magnetic objects (140a, 140b) point in different directions, particularly in opposite directions.
37. The detection device (10) according to embodiment 35 or embodiment 36, wherein the array further comprises an additional row (k3) and/or an additional column (s3), wherein at least one additional magnetometer (130) is arranged in the additional row (k3) and/or the additional column (s3), and/or
   wherein at least one additional magnetic object (140) is arranged in the additional row (k3) and/or the additional column (s3), and/or
   wherein at least one position of the additional row (k3) and/or additional column (s3) is free of magnetometers (130) and/or magnetic objects (140).
38. The detection device (10) according to any one of embodiments 35 to 37, wherein the array comprises at least three rows (k1-3) and at least three columns (s1-3),
   wherein at least one magnetometer (130) of the plurality of magnetometers (130) is arranged in every row (k1-3) and/or every column (s1-3), and
   wherein at least one magnetic object (140) of the plurality of magnetometers (140) is arranged in every row (k1-3) and/or every column (s1-3),
   and more specifically wherein at least one position of an intersection of the rows (k1-3) and columns (s1-3) in the array is free of magnetic objects (140) and magnetometers (130).
39. The detection device (10) according to any one of embodiments 35 to 38, wherein the array comprises at least three rows (k1-3) and at least three columns (s1-3),
   wherein each position of the array comprises a magnetic object (140) or a magnetometer (130),
   wherein the plurality of magnetometers (130) is arranged at positions at respective corners of the array and in the center of the array, and
   wherein the plurality of magnetic objects (140) is arranged at positions between the respective magnetometers (130).
40. The detection device (10) according to any one of embodiments 35 to 38, wherein the array comprises at least three rows (k1-3) and at least three columns (s1-3),
   wherein a position in at least one row (k1-3) and/or at least one column (s1-3) is free of magnetic objects (140), and
   more specifically wherein at least one position is free of magnetometers (130) and magnetic objects (140).
41. The detection device (10) according to any one of embodiments 35 to 38 or embodiment 40, wherein the array comprises at least three rows (k1-3) and at least three columns (s1-3),
   wherein the plurality of magnetic objects (140) is arranged at positions at respective corners of the array,
   wherein the plurality of magnetometers (130) is arranged at side positions of the array between the magnetic objects (140),
   and more specifically wherein the position in the center of the array is free of magnetic objects (140) and magnetometers (130).
42. The detection device (10) according to any one of embodiments 35 to 38, wherein the array comprises at least three rows (k2-4) and at least three columns (s2-4),
   wherein at least one row (k3) and at least one column (s3) is free of magnetic objects (140), wherein at least one row (k2, k4) and at least one column (s2, s4) is free of magnetometers (130),
   and wherein plural positions of the array are free of magnetometers (130) and magnetic objects (140).
43. The detection device (10) according to any one of embodiments 35 to 38 or embodiment 42, wherein the array comprises at least three rows (k2-4) and at least three columns (s2-4),
   wherein the plurality of magnetic objects (140) is arranged at positions at respective corners of the array,
   wherein one magnetometer (130) is arranged in the center of the array,
   and more specifically wherein side positions of the array between the magnetic objects (140) are free of magnetic objects (140) and magnetometers (130).
44. The detection device (10) according to any one of embodiments 35 to 38, embodiment 40 or embodiment 41, wherein the array comprises at least three rows (k1-3) and at least five columns (s1-5),
   wherein adjacent magnetic objects (140 are separated by a row (k2) and by a column (s2, s4),
   wherein the plurality of magnetic objects (140) is arranged at positions at respective corners and at intermediate row positions of the array, and
   wherein the plurality of magnetometers (130) is arranged at side positions of the array between the magnetic objects (140),
   and more specifically wherein at least one row (k2) and at least one column (s2, s4) is free of magnetic objects (140).
45. The detection device (10) according to any one of embodiments 35 to 38, embodiment 42 or embodiment 43, wherein the array comprises at least three rows (k1-3) and at least three columns (s1-3),
   wherein a plurality of magnetometers (130) is arranged in at least one row (k2),
   wherein the at least one row (k2) is shifted relative to the other rows (k1, k3) such that at least some magnetometers of the plurality of magnetometers (140) are arranged at intermediate positions,
   wherein the plurality of magnetic objects (140) is arranged at positions at respective corners of the array,
   and more specifically wherein at least one row (k2) and at least one column (s2) is free of magnetic objects (140)
46. The detection device (10) according to embodiment 45, wherein at least one row (k1, k3) is free of magnetometers (130), and/or wherein all magnetometers (130) are arranged in one row (k2).
47. The detection device (10) according to embodiment 45 or embodiment 46, wherein at least two rows (k1, k3, k5) and at least two columns (s2, s4) are free of magnetic objects (140),
   wherein a plurality of magnetometers (130) is arranged in at least one row (k2) and at least two columns (s2, s4) that are free of magnetic objects (140), and
   wherein at least two positions of coordinates of the matrix are free of magnetic objects (140) and magnetometers (130).
48. A detection system (1) for detecting and/or determining an input event, comprising:
   a detection device (10) according to any one of the preceding embodiments, and
   a processing unit (20) configured to detect and/or determine an input event based on a deflection of the flexible substrate (120) relative to the stationary substrate (110).
49. The detection system (1) according to embodiment 48, wherein the processing unit (20) is arranged in the detection device (10), and/or wherein the processing unit (20) is external to the detection device (10) and communicatively coupled with the detection device (10).
50. The detection system (1) to embodiment 48 or embodiment 49, wherein the system (1) comprises at least one additional magnetic object (41), which is operated in a sensing volume (M) created by the at least one magnetometer (130),
   and more specifically wherein the system (1) comprises at least one user-borne device (40), wherein the user-borne device (40) comprises or is coupled with the at least one additional magnetic object (41).
51. The detection system (1) according to embodiment 50, wherein the system (1) comprises at least one output device (30), wherein the processing unit (20) is configured to represent one or more of the at least two magnetic objects (140, 140a, 140b), the at least one additional magnetic object (41) and the user-borne device (40) as a virtual object on the at least one output device (30), wherein a movement of the virtual object on the at least one output device (30) is based on a virtual reproduction of a determined location of the at least two magnetic objects (140, 140a, 140b), the at least one additional magnetic object (41) and the user-borne device (40), more specifically relative to the housing (100) and/or the flexible substrate (120).
52. A method (200) for detecting and/or determining an input event, comprising:
   collecting magnetic field measurements (210) associated with at least one magnetic field created by at least two magnetic objects (140, 140a, 140b) and measured with at least one magnetometer (130) of a detection device (10) for detecting and/or determining an input event according to any one of embodiments 1 to 47, and
   detecting and/or determining (240) an input event based on the obtained magnetic field measurements.
53. The method (200) according to embodiment 52, wherein detecting and/or determining (240) an input event comprises:
   determining a location of at least one of the at least two magnetic objects (140, 140a, 140b) based on the collected magnetic field measurements.
54. The method (200) according to embodiment 52 or embodiment 53, wherein detecting and/or determining (240) an input event comprises:
   detecting a magnetic field change (231) of the at least one magnetic field created by the at least two magnetic objects (140a, 140b) and associated magnetic field measurements,
      and/or
   detecting a location change (232) of at least one of the at least two magnetic objects (140a, 140b) relative to the at least one magnetometer (130),
   more specifically wherein the magnetic field change and/or the location change is dependent on the deflection of the flexible substrate (120) relative to the stationary substrate (110).
55. The method (200) according to embodiment 54, wherein the magnetic field change and/or the location change is dependent on the deflection of the flexible substrate (120) and an associated movement of the at least two magnetic objects (140, 140a, 140b) relative to the at least one magnetometer (130).
56. The method (200) according to embodiment 54 or embodiment 55, wherein detecting and/or determining an input event (240) comprises:
   determining the input event based on the detected magnetic field change and/or the detected location change.
57. The method (200) according to any one of embodiments 54 to 56, wherein the detected magnetic field change and/or the detected location change is indicative of an input location, an input motion and/or an input pressure level on the flexible substrate (120), wherein determining the input event (240) comprises:
   determining an input location by correlating the detected magnetic field change and/or
   the detected location change with an interaction surface area of the flexible substrate (120), and/or
   determining an input motion by detecting the magnetic field change and/or the location change over a time period comprising multiple time samples, wherein the magnetic field change and/or the location change is detected at each time sample, and by correlating the detected magnetic field change and/or the location change over the time period with the interaction surface area of the flexible substrate (120), and/or
   determining an input pressure level by determining deflection parameters based on the detected magnetic field change and/or the detected location change, wherein the deflection parameters are indicative of a force direction, a force location and/or a force per interaction surface area applied on the flexible substrate (120).
58. The method (200) according to any one of embodiments 52 to 57, wherein the detection device (10) is in a first state (11) in the absence of a force (F) applied to the flexible substrate (120), and wherein the detection device (10) is in a second state (12) when a force (F) is applied to the flexible substrate (120),
   wherein collecting magnetic field measurements (210) comprises:
   collecting first magnetic field measurements of the magnetic fields of each of the at least two magnetic objects (140a, 140b) in the first state (11), and collecting second first magnetic field measurements of the magnetic fields of each of the at least two magnetic objects (140a, 140b) in the second state (12).
59. The method (200) according to embodiment 58, wherein detecting and/or determining an input event (240) comprises:
   comparing the first magnetic field measurements (220) with the second magnetic fields measurements,
   detecting, based on the compared magnetic field measurements, a magnetic field change and/or a location change of each of the at least two magnetic objects (140, 140a, 140b) from the first state (11) to the second state (12), and
   determining, based on a detected magnetic field change and/or a detected location change, the input event.
60. The method (200) according to any one of embodiments 52 to 59, wherein the method (200) further comprises:
   determining at least one trigger event (250) based on the detected and/or determined input event,
   more specifically wherein determining at least one trigger event (250) comprises:
      analyzing the detected and/or determined input event, and
      correlating the analyzed detected and/or determined input event with the at least one trigger event, more specifically wherein the at least one trigger event implements an input event as an action in a digital environment, particularly wherein the at least one trigger event is configured to control an action in the digital environment.
61. The method (200) according to any one of embodiments 52 to 60, further comprising: collecting additional magnetic field measurements associated with a magnetic field created by at least one additional magnetic object (41) and measured with the at least one magnetometer (130), and
   determining a location of the at least one additional magnetic object (41) based on the additional magnetic field measurements.
62. The method (200) according to embodiment 61, further comprising: representing (260) the at least two magnetic objects (140, 140a, 140b) and/or the at least one additional magnetic object (41) as virtual object on at least one output device (50) based on determined location(s), more specifically wherein a movement of the virtual object on the at least one output device (50) is based on a virtual reproduction of the determined location(s) of the at least two magnetic objects (140, 140a, 140b) and/or the at least one additional magnetic object (41), more specifically relative housing (100) and/or to the flexible substrate (120)
63. The method (200) according to any one of embodiments 52 to 62, wherein the method (200) is a computer-implemented method.
64. The method (200) according to embodiment 63, wherein a processing unit (20) of a system (1) according to any one of embodiments 48 to 51 is configured to execute the computer-implemented method.
65. A computer system configured to execute the computer-implemented method (200) according to embodiment 63 or embodiment 64.
66. A computer program configured to execute the computer-implemented method (200) according to embodiment 63.
67. A computer-readable medium or signal storing the computer program of embodiment 66.

### REFERENCE NUMERALS

- X: first reference axis
- Y: second reference axis
- Z: vertical reference axis
- M: sensing volume
- U: user
- F_{L}: radial force
- F_{V}: vertical force
- F: resultant force
- α1: orientation of first magnetic object in first state
- α2: orientation of second magnetic object in first state
- α3: orientation of first magnetic object in second state
- α4: orientation of second magnetic object in second state
- 11: radial position of first magnetic object in first state
- l2: radial position of second magnetic obj ect in first state
- l3: radial position of first magnetic object in second state
- l4: radial position of second magnetic object in second state
- z 1: vertical position of first magnetic obj ect in first state
- z2: vertical position of second magnetic obj ect in first state
- z3: vertical position of first magnetic object in second state
- z4: vertical position of second magnetic object in second state

- d1: distance between flexible substrate and stationary substrate in first state
- d2: distance between flexible substrate and stationary substrate in second state
- a1: first magnetic object vertical axis
- a2: second magnetic object vertical axis
- k: row
- s: column
- aₛₖ: intersection position
- dₖ: distance between rows
- dₛ: distance between columns
- 1: system
- 10: detection device
- 11: first state
- 12: second state
- 20: processing unit
- 30: output device
- 40: user-borne device
- 41: additional magnetic object
- 100: housing
- 101: first housing portion
- 102: second housing portion
- 110: stationary substrate
- 120: flexible substrate
- 121: first layer
- 122: second layer
- 130: magnetometer
- 140: magnetic object
- 141: magnetic object moment vector
- 142: saturation area

## Claims

1. A detection device (10) for detecting and/or determining an input event, comprising:
a housing (100),
a stationary substrate (110) connected to the housing (100), and
a flexible substrate (120) connected to the housing (100) above and at a distance from the stationary substrate (110),
wherein at least one magnetometer (130) is connected to one of the stationary substrate (110) and the flexible substrate (120),
wherein at least two magnetic objects (140, 140a, 140b) are connected to the other one of the stationary substrate (110) and the flexible substrate (120), the at least two magnetic objects (140, 140a, 140b) being at a distance relative to each other, and
wherein the flexible substrate (120) is configured to deflect relative to the stationary substrate (110) based on a force (F) applied to the flexible substrate (120).

2. The detection device (10) according to claim 1, wherein the flexible substrate (120) is configured to deflect towards the stationary substrate (110) based on a force (F) applied to the flexible substrate (120).

3. The detection device (10) according to claim 1 or claim 2, wherein the deflection of the flexible substrate (120) relative to the stationary substrate (110) is indicative of an input event, more specifically wherein the input event comprises an input location, an input motion and/or an input pressure level.

4. The detection device (10) according to any one of the preceding claims, wherein the detection device (10) comprises a processing unit (20) and/or is communicatively couplable with a processing unit (20) external to the detection device (10).

5. The detection device (10) according to claim 4, wherein the processing unit (20) is configured to detect and/or determine an input event based on a detected magnetic field change of at least one magnetic field created by one or more of the at least two magnetic objects (140a, 140b), more specifically wherein the magnetic field change is dependent on the deflection of the flexible substrate (120) relative to the stationary substrate (110).

6. The detection device (10) according to any one of the preceding claims, wherein the detection device (10) is in a first state (11) in the absence of a force (F) applied to the flexible substrate (120), and wherein the detection device (10) is in a second state (12) when a force (F) is applied to the flexible substrate (120),
more specifically wherein in the first state (11), the at least two magnetic objects (140a, 140b) create a first magnetic field measured with the at least one magnetometer (130), and wherein in the second state (12) the at least two magnetic objects (140a, 140b) create a second magnetic field measured with the at least one magnetometer (130), wherein the second magnetic field is different from the first magnetic field.

7. The detection device (10) according to any one of the preceding claims, wherein the at least one magnetometer (130) is connected to the stationary substrate (110), and wherein the at least two magnetic objects (140a, 140b) are connected to the flexible substrate (120).

8. The detection device (10) according to any one of the preceding claims, wherein the housing (100) comprises a first housing portion (101) and a second housing portion (102), wherein the stationary substrate (110) is connected to the first housing portion (101) and wherein the flexible substrate (120) is connected to the second housing portion (102),
more specifically wherein the first housing portion (101) is directly connected to the second housing portion (102), or
wherein the first housing portion (101) is coupled with the second housing portion (102) via an intermediate housing portion.

9. The detection device (10) according to any one of the preceding claims, wherein the detection device (10) comprises a plurality of magnetic objects (140, 140a, 140b) connected to one of the stationary substrate (110) and the flexible substrate (120) at a distance relative to each other, and wherein the detection device (10) comprises a plurality of magnetometers (130) connected to the other one of the stationary substrate (110) and the flexible substrate (120) at a distance relative to each other.

10. The detection device (10) according to any one of the preceding claims, wherein, viewed in the vertical direction (Z), the at least two magnetic objects (140, 140a, 140b) and the at least one magnetometer (130) are arranged with respect to each other as to form a pattern which is essentially formed as an array comprising rows (k) and columns (s), more specifically wherein respective rows (k) are distanced from each other by a distance (dₖ) and wherein respective columns (s) are distanced from each other by a distance (dₛ).

11. A detection system (1) for detecting and/or determining an input event, comprising:
a detection device (10) according to any one of the preceding claims, and
a processing unit (20) configured to detect and/or determine an input event based on a deflection of the flexible substrate (120) relative to the stationary substrate (110).

12. A method (200) for detecting and/or determining an input event, comprising:
collecting magnetic field measurements (210) associated with at least one magnetic field created by at least two magnetic objects (140, 140a, 140b) and measured with at least one magnetometer (130) of a detection device (10) for detecting and/or determining an input event according to any one of claims 1 to 10, and
detecting and/or determining (240) an input event based on the obtained magnetic field measurements.

13. The method (200) according to claim 12, wherein detecting and/or determining (240) an input event comprises:
detecting a magnetic field change (231) of the at least one magnetic field created by the at least two magnetic objects (140a, 140b) and associated magnetic field measurements,
and/or
detecting a location change (232) of at least one of the at least two magnetic objects (140a, 140b) relative to the at least one magnetometer (130),
more specifically wherein the magnetic field change and/or the location change is dependent on the deflection of the flexible substrate (120) relative to the stationary substrate (110).

14. The method (200) according to claim 13, wherein the detected magnetic field change and/or the detected location change is indicative of an input location, an input motion and/or an input pressure level on the flexible substrate (120),
wherein determining the input event (240) comprises:
determining an input location by correlating the detected magnetic field change and/or the detected location change with an interaction surface area of the flexible substrate (120), and/or
determining an input motion by detecting the magnetic field change and/or the location change over a time period comprising multiple time samples, wherein the magnetic field change and/or the location change is detected at each time sample, and by correlating the detected magnetic field change and/or the location change over the time period with the interaction surface area of the flexible substrate (120), and/or
determining an input pressure level by determining deflection parameters based on the detected magnetic field change and/or the detected location change, wherein the deflection parameters are indicative of a force direction, a force location and/or a force per interaction surface area applied on the flexible substrate (120).

15. The method (200) according to any one of claims 12 to 14, wherein the method (200) further comprises:
determining at least one trigger event (250) based on the detected and/or determined input event,
more specifically wherein determining at least one trigger event (250) comprises:
analyzing the detected and/or determined input event, and
correlating the analyzed detected and/or determined input event with the at least one trigger event, more specifically wherein the at least one trigger event implements an input event as an action in a digital environment, particularly wherein the at least one trigger event is configured to control an action in the digital environment.
